# EUROPÄISCHE PATENTSCHRIFT

(11) **EP 2 637 776 B1**
(45) Veröffentlichungstag und Bekanntmachung des Hinweises auf die Patenterteilung: **22.04.2026**
(21) Anmeldenummer: 11781992.0
(22) Anmeldetag: 07.11.2011
(51) Int. Cl.: B01J 4/02, B01J 19/00, B01J 19/24

(54) **SUBSTANZBEHÄLTNIS FÜR EINE CHEMISCHE REAKTION**
SUBSTANCE CONTAINER FOR A CHEMICAL REACTION
RÉCIPIENT DE SUBSTANCE POUR UNE RÉACTION CHIMIQUE

(30) Priorität: 08.11.2010 CH 18652010
(43) Veröffentlichungstag der Anmeldung: 18.09.2013
(73) Patentinhaber: Chemspeed Technologies AG, 4414 Füllinsdorf (CH)
(72) Erfinder: GUELLER, Rolf, 5027 Herznach (CH); JUCHLI, Daniel, 4303 Kaiseraugst (CH); SCHNEIDER, Michael, 5070 Frick (CH); SCHNYDER, Annie, 4423 Hersberg (CH)
(74) Vertreter: Bohest AG
(86) Internationale Anmeldenummer: PCT/CH2011/000266
(87) Internationale Veröffentlichungsnummer: WO 2012/061946

(56) Entgegenhaltungen:
- EP-B1- 2 215 026
- WO-A1-2004/014543
- WO-A2-02/43854
- DE-A1- 102005 059 000
- GB-A- 2 332 882
- US-A1- 2003 012 690
- US-A1- 2004 235 046
- US-A1- 2011 062 036
- XP093364351
- E. MATHIOWITZ ET AL: "POLYAMIDE MICROCAPSULES FOR CONTROLLED RELEASE. II. RELEASE CHARACTERISTICS OF THE MICROCAPSULES", JOURNAL OF MEMBRANE SCIENCE, vol. 40, 1 January 1989 (1989-01-01), pages 27 - 41, XP055018590
- KELLER M W ET AL: "Mechanical Properties of Microcapsules Used in a Self-Healing Polymer", EXPERIMENTAL MECHANICS ; AN INTERNATIONAL JOURNAL, KLUWER ACADEMIC PUBLISHERS, BO, vol. 46, no. 6, 23 November 2006 (2006-11-23), pages 725 - 733, XP019468931, ISSN: 1741-2765, DOI: 10.1007/S11340-006-9659-3
- AARON P. ESSER-KAHN ET AL: "Triggered Release from Polymer Capsules", MACROMOLECULES, vol. 44, no. 14, 6 July 2011 (2011-07-06), pages 5539 - 5553, XP055018547, ISSN: 0024-9297, DOI: 10.1021/ma201014n
- THOMAS VAN OORDT ET AL: "MINIATURE STICK-PACKAGING - AN INDUSTRIAL TECHNOLOGY FOR PRE-STORAGE AND RELEASE OF REAGENTS IN LAB-ON- A-CHIP SYSTEMS", 15TH INTERNATIONAL CONFERENCE ON MINIATURIZED SYSTEMS FOR CHEMISTRY AND LIFE SCIENCES, 6 October 2011 (2011-10-06), pages 437 - 439, XP055018647

## Beschreibung

Die Erfindung betrifft ein Verfahren zur Durchführung einer chemischen Reaktion gemäss dem Oberbegriff des unabhängigen Anspruchs 1, ein eine chemische Substanz enthaltendes Behältnis gemäss dem Oberbegriff des unabhängigen Anspruchs 9 sowie ein Set von Behältnissen.

In der WO 02/13969 A1 (und der dazu korrespondierenden US 2004/0235046 A1) ist ein Verfahren zur Durchführung einer chemischen Reaktion durch Umsetzung zweier oder mehrerer Substanzen in einem Reaktor beschrieben, bei welchem mindestens eine der für die Reaktion benötigten Substanzen in einem gasdicht verschlossenen Behältnis vorliegt, in bzw. mit diesem Behältnis in den Reaktor eingebracht und durch Aufbrechen des Behältnisses vor oder im Laufe der Reaktion aus dem Behältnis freigesetzt wird. Das Aufbrechen der Behältnisse innerhalb des Reaktors erfolgt dabei durch ungezielte Anwendung einer chemischen, physikalischen oder mechanischen Einwirkung, typischerweise etwa durch die Schlagwirkung eines im Reaktor vorhandenen Rührers. Ferner kann auch der im Reaktor herrschende Druck zum Aufbrechen der Substanzbehältnisse führen. Beim Verfahren der WO 02/13969 A1 kommt ein Set von Substanzbehältnissen zum Einsatz, die jeweils moläquivalent abgestufte Substanzmengen enthalten. Die Verwendung solcher mit moläquivalent abgestuften Substanzmengen vorabgefüllten Behältnisse erleichtert dem Labor-Chemiker die korrekte Zudosierung der für die jeweilige Reaktion erforderlichen Substanzen bzw. ermöglicht es erst, mit vorabgefüllten Substanzmengen eine erforderliche Substanzmenge zu "bedienen". Insbesondere ist dies bei der Durchführung von Parallel-Reaktionen von grosser Bedeutung.

Bei vielen chemischen Reaktionen müssen oft verhältnismässig kleine und kleinste Substanzmengen zu genau bestimmten Zeitpunkten oder beim Erreichen eines genau definierten physikalischen Zustands, z.B. Drucks, während des Reaktionsablaufs in die im Reaktor befindliche Reaktionsmasse eingebracht werden. Wenn zu diesem Zeitpunkt im Reaktor ein verhältnismässig hoher Druck herrscht, erfordert die Einbringung der Substanz extrem aufwändige und entsprechend kostenintensive Apparaturen. Ein weiteres Problem stellt sich vielfach auch dadurch, dass die einzubringenden Substanzen oft sehr empfindlich sind und zum Beispiel nicht mit Luft oder Feuchtigkeit in Kontakt kommen dürfen. Andererseits dürfen z.B. gewisse Katalysatoren in der Polyolefin Synthese erst bei Erreichen eines genau bestimmten Drucks (z.B. Ethylengasdruck) der Reaktionsmischung zugeführt werden. Dies erhöht den apparativen Aufwand für die Zudosierung solcher Substanzen nochmals erheblich. Im Bereich der Polyolefin-Synthese muss zum Beispiel eine sehr kleine Menge, typisch etwa 0.6 mg, eines hochsensitiven Katalysators in einer Suspension mittels einer Hochdruckpumpe unter absolutem Luft- und Feuchtigkeitsausschluss in einen typisch 100-1000 ml fassenden oder sogar noch grösseren Reaktor gegen typischerweise 30 bar Druck zugepumpt werden. Ein weiteres, noch viel schwererwiegendes Problem besteht darin, dass es mit den heute zur Verfügung stehenden, sehr aktiven Katalysatoren z.B. in der heterogenen Katalyse praktisch nicht mehr möglich ist, extrem kleine Katalysator-Mengen in einer Suspension in einen Reaktor gegen einen hohen Druck von z.B. 60 bar zuzudosieren, ohne dass die wenigen suspendierten Katalysator-Partikel verloren gehen bzw. durch die praktisch unvermeidbare Restfeuchtigkeit oder Restluft in den komplexen, meist unübersichtlichen Leitungen zerstört werden, bevor sie den Reaktor erreicht haben. Wenn dann noch, wie üblich, sensitive Co-Katalysatoren und allenfalls weitere Reagenzien dazukommen, wird die Zudosierung unter Druck nochmals problematischer.

Viele chemische Reaktionen erfordern die Zugabe bestimmter Substanzen während einer bestimmten Phase des Reaktionsablaufs. Dies bedeutet in der Praxis, dass der Reaktor für die Substanzzuführung zugänglich gemacht werden muss, was bei unter Druck stehendem Reaktor natürlich besondere technisch aufwändige und schwierig von Restluft oder Restwasser zu reinigende Dosierapparaturen erforderlich macht (Druckpumpen, Schleusen etc.). Selbst mit hohem technischen Aufwand ist es praktisch unmöglich, die Substanzen in reiner, z.B. fester Form zuzugeben. Gerade dies würde aber neue Möglichkeiten eröffnen und wäre daher besonders wünschenswert.

Ein weiteres Problem besteht bei der Durchführung von sogenannten Parallel-Reaktionen mit einer Mehrzahl von Reaktoren. Wenn die Reaktionen die Zudosierung geringster Mengen hochempfindlicher Substanzen insbesondere gegen hohe Reaktordrücke erfordern, steigt der apparative Aufwand enorm. Ein weiteres Problem besteht generell bei der Durchführung jeglicher paralleler Experimente, insbesondere bei kurzen und mittleren Reaktionszeiten. Dies ist aber gerade der interessanteste Teil für z.B. die parallele Synthese. In der Praxis können solche Reaktionen dann nur pseudo-parallel durchgeführt werden, d.h. die Zudosierung der Substanzen erfolgt sequentiell, so dass der apparative Aufwand innerhalb vernünftiger Grenzen bleibt. Falls z.B. die Reaktionszeit 10 Minuten beträgt und die Zudosierung einer Substanz eine Minute in Anspruch nimmt, muss spätestens beim Zudosieren der Substanz in den zehnten Reaktor der erste Reaktor weiterbehandelt werden, d.h. mit einer weiteren Substanz versorgt werden. Dabei ergibt sich oft die Schwierigkeit, dass die in einem Reaktor laufende Reaktion bereits die Zudosierung einer Substanz erfordert, während die dafür vorgesehene Apparatur noch durch einen anderen Reaktor blockiert ist. Dies ist z.B. für einen Pipettierroboter ohne enormen technischen Aufwand praktisch unmöglich zu lösen. Dieses Problem kann zum Teil durch sogenanntes "Scheduling" mit Hilfe von hochkomplexen Software-Algorithmen zwar entschärft, aber praktisch nicht zufrieden stellend gelöst werden.

Es wäre demnach wünschenswert, eine einfache Lösung zu haben, mit welcher mit einfachster Software und einfachster Hardware alle Reaktionen gleichzeitig bedient werden könnten, vor allem z.B. jeder Reaktion eine gewünschte Substanz zu jedem beliebigen Zeitpunkt, z.B. auch zum gleichen Zeitpunkt in allen Reaktionen, zugeben zu können. Dies würde nicht nur der parallelen Synthese, sondern auch klassisch durchgeführten Experimenten einen technischen Durchbruch verschaffen.

Die einleitend genannte WO 02/13969 A1 beschäftigt sich, wie schon erwähnt, vorwiegend mit der Bereitstellung von Substanzbehältnissen, die jeweils moläquivalent abgestufte Substanzmengen enthalten. Die vorstehend erläuterte Problematik bei der Zudosierung besonders heikler Substanzen ist in diesem Dokument in keiner Weise angesprochen. Ferner findet sich in diesem Dokument auch weder explizit noch implizit irgendein Lösungsansatz für diese Problematik. Im Weiteren ist in diesem Dokument keine Lösung für das Problem "Scheduling" offenbart. Zudem ist darin auch nicht beschrieben, dass eine Reaktion komplett so vorbereitet werden könnte, dass diese (oder ev. auch nur Teile davon) sozusagen "ferngesteuert" geführt werden könnte.

In der DE 10 2005 059 000 A1 ist ein Verfahren und eine dafür geeignete Vorrichtung zur Herstellung von Mischungen aus mindestens drei Komponenten beschrieben. Die Vorrichtung umfasst ein flaschenförmiges Mischgefäss, in welchem sich eine der Mischungskomponenten befindet. In einem Öffnungshals des Mischgefässes ist ein zweikammeriger Innenbehälter eingesetzt und fixiert. Die beiden Kammern des Innenbehälters sind durch eine aufbrechbare Trennmembrane getrennt und enthalten je eine der beiden übrigen Mischungskomponenten. Auf dem Öffnungshals des Mischgefässes sitzt eine drehbare Verschlusskappe. Der Innenbehälter ist unten, das heisst zum Innenraum des Mischgefässes hin, durch eine Berstscheibe abgeschlossen. Nach oben ist der Innenbehälter nur indirekt über die Verschlusskappe des Mischgefässes abgeschlossen. Die Verschlusskappe ist mechanisch bzw. kinematisch mit einem in den Innenbehälter hineinragenden und auf der Membrane aufstehenden Stab gekoppelt. Durch Drehen der Verschlusskappe wird der Stab einwärts gedrückt und dadurch die Trennmembrane aufgebrochen, wobei sich die beiden im Innenbehälter befindlichen Mischungskomponenten vermischen und miteinander reagieren. Bei der Vermischung bzw. Reaktion der beiden Komponenten entsteht im Innenbehälter durch Gasentwicklung ein erhöhter Druck, der die Berstscheibe am unteren Ende des Innenbehälters aufbricht, so dass sich der Inhalt des Substanzbehälters in das Mischgefäss ergiesst und mit der dort befindlichen Mischungskomponente vermischt. Die Auslösung des Mischvorgangs erfolgt bei der in diesem Dokument offenbarten Vorrichtung bzw. dem dort offenbarten Mischverfahren durch manuelle mechanische Krafteinwirkung auf die und dadurch bewirktes Aufbrechen der Trennmembran zwischen den beiden Kammern des Innenbehälters. Der Innenbehälter ist im Mischgefäss bewegungsfest fixiert und für sich allein nicht gasdicht verschlossen.

Die GB 2 332 882 A offenbart eine sich selbst aufblasende Hülle, in der eine erste Reaktionskomponente in einem ersten Behältnis enthalten ist, welches erste Behältnis sich wiederum in einem zweiten Behältnis befindet, welches seinerseits noch eine zweite Reaktionskomponente enthält und innerhalb der Hülle angeordnet ist. Durch mechanische Krafteinwirkung von aussen wird das erste Behältnis aufgebrochen, wonach es zu einer Reaktion zwischen der ersten Reaktionskomponente und der zweiten Reaktionskomponente kommt. Die Bruchfestigkeit des ersten Behältnisses soll vorzugsweise kleiner als 275,8 bar (4000 psi) sein.

In der US 2003/012690 A1 ist eine spritzenartige Vorrichtung zum Lösen einer Reagens in einem Lösungsmittel beschrieben, bei der das Lösungsmittel in einer Kammer angeordnet ist, die durch einen Gehäuseteil, einen Kolben und eine zerbrechliche Trennwand begrenzt ist. Die Bruchfestigkeit der Trennwand liegt im Bereich von 0,34-6,2 bar (5-90 psi).

Die WO 2004/014543 A1 offenbart eine Vorrichtung zur Durchführung von chemischen Reaktionen, die einen Reaktor mit einer ersten Substanz und einen ausserhalb des Reaktors angeordneten und mit diesem über eine Transferleitung verbundenen Speicherbehälter mit einer zweiten Substanz aufweist. Der Speicherbehälter ist an eine Druckgasquelle angeschlossen, damit der Druck im Speicherbehälter ungefähr gleich hoch wie der Innendruck im Reaktor gehalten werden kann, so dass ein Verschlusselement des Speicherbehälters nicht unbeabsichtigt aufbricht.

Vor dem Hintergrund der vorstehend erläuterten Problematik liegt eine erste Aufgabe der Erfindung darin, die Zudosierung von für die Reaktion erforderlichen Substanzen zu vereinfachen bzw. in Extremfällen überhaupt erst zu ermöglichen. Eine weitere Aufgabe der Erfindung besteht darin, ein Verfahren der gattungsgemässen Art dahingehend zu verbessern, dass es für die Durchführung von echten Parallel-Reaktionen geeignet ist. Schliesslich soll durch die Erfindung ein Verfahren der gattungsgemässen Art dahingehend verbessert werden, dass die Zugabe auch von hochempfindlichen Substanzen und insbesondere kleinsten Mengen davon zu jedem gewünschten Zeitpunkt des Reaktionsablaufs mit einfachen Mitteln veranlasst werden kann, ohne dass dazu der Reaktor geöffnet werden muss.

Diese der Erfindung zugrunde liegenden Aufgaben werden durch das erfindungsgemässe, im unabhängigen Anspruch 1 definierte Verfahren, durch das erfindungsgemässe, im unabhängigen Anspruch 9 definierte Behältnis und durch das erfindungsgemässe, im unabhängigen Anspruch 15 definierte Set von Behältnissen gelöst. Besonders vorteilhafte Weiterbildungen und Ausgestaltungen des erfindungsgemässen Verfahrens, des erfindungsgemässen Behältnisses und des erfindungsgemässen Sets von Behältnissen ergeben sich aus den jeweils abhängigen Ansprüchen.

Hinsichtlich des erfindungsgemässen Verfahrens besteht das Wesen der Erfindung in Folgendem: Bei einem Verfahren zur Durchführung einer chemischen Reaktion durch Umsetzung zweier oder mehrerer Substanzen in einem Reaktor liegt mindestens eine Substanz in einem gasdicht verschlossenen, im Wesentlichen reaktionsinerten Behältnis vor, wird in diesem Behältnis in den Reaktor eingebracht und dann erst durch gezieltes Aufbrechen des Behältnisses vor oder im Laufe der Reaktion aus dem Behältnis freigesetzt. Es wird ein Behältnis eingesetzt, das so ausgebildet ist, dass es bei Überschreiten einer spezifizierten Berst-Druckdifferenz zwischen dem Druck in seinem Inneren und dem Druck ausserhalb des Behältnisses aufbricht. Das Aufbrechen des Behältnisses und damit die Freisetzung der im Behältnis befindlichen Substanz erfolgt durch gezielte Anwendung eines Drucks im Reaktor, bei welchem Druck die Differenz zwischen dem Druck im Reaktor und dem Druck im Behältnis die spezifizierte Berst-Druckdifferenz des Behältnisses überschreitet. Die gezielte Anwendung eines Drucks im Reaktor erfolgt durch Beaufschlagung des Reaktors mit einem unter entsprechendem Druck stehenden Gas oder Gasgemisch, durch Anwendung eines Unterdrucks, durch Ausnutzen eines durch die Reaktion selbst im Reaktor entstehenden Drucks oder durch gezieltes Erwärmen von Reaktionsmasse im Reaktor.

Hinsichtlich des erfindungsgemässen Behältnisses besteht das Wesen der Erfindung in Folgendem: Ein gasdicht verschlossenes und eine abgemessene Menge einer chemischen Substanz enthaltendes Behältnis ist für eine spezifizierte, in irgendeiner Form bekannte Berst-Druckdifferenz zwischen dem Druck in seinem Inneren und dem Druck ausserhalb des Behältnisses ausgebildet, so dass es bei einer die spezifizierte Berst-Druckdifferenz überschreitenden Druckdifferenz zwischen dem Druck in seinem Inneren und dem Druck ausserhalb des Behältnisses aufbricht und die in ihm enthaltene Substanz freisetzt. Dabei ist dem Behältnis eine Information über die spezifizierte Berst-Druckdifferenz durch eine Markierung am Behältnis selbst oder an oder in einer Behältnis-Verpackung zugeordnet.

Hinsichtlich des erfindungsgemässen Sets von Behältnissen besteht das Wesen der Erfindung in Folgendem: Bei einem Set von mindestens zwei gasdicht verschlossenen und je eine abgemessene Menge einer chemischen Substanz enthaltenden Behältnissen ist jedes Behältnis für eine spezifizierte, in irgendeiner Form bekannte Berst-Druckdifferenz zwischen dem Druck in seinem Inneren und dem Druck ausserhalb des Behältnisses ausgebildet, so dass es bei einer die spezifizierte Berst-Druckdifferenz überschreitenden Druckdifferenz zwischen dem Druck in seinem Inneren und dem Druck ausserhalb des Behältnisses aufbricht und die in ihm enthaltene Substanz freisetzt. Dabei ist jedem Behältnis eine Information über die spezifizierte Berst-Druckdifferenz durch eine Markierung am Behältnis selbst oder an oder in einer Behältnis-Verpackung zugeordnet.

Unter "Substanz" bzw. "Substanzen" werden im vorliegenden Zusammenhang nicht nur die an der Reaktion beteiligten Ausgangsmaterialien, sondern auch solche Materialien verstanden, welche auf die Stöchiometrie des zu bildenden Reaktionsprodukts nur indirekt oder gar nicht oder nur potentiell Einfluss nehmen oder aus irgendeinem anderen Grund zugeführt werden, wie z.B. Lösungsmittel, Katalysatoren, Co-Katalysatoren, Aktivatoren, Inhibitoren, Acceleratoren etc.. Die Substanzen können fest, flüssig oder gasförmig sein, auch Lösungen und Suspensionen sind möglich. Die physikalischen und chemischen Bedingungen, unter welchen die Substanzen im Reaktor zusammengeführt werden, bis das angestrebte Reaktionsprodukt entsteht, sind als Reaktionsbedingungen bezeichnet.

Unter "im Wesentlichen reaktionsinert" wird im vorliegenden Zusammenhang verstanden, dass das Material oder die Materialien, aus dem das Behältnis besteht, keinen oder zumindest keinen nennenswerten Einfluss auf die chemische Reaktion hat bzw. haben. Materialien wie Glas oder auch Polyethylen sind bekanntermassen für die meisten Reaktionen geeignet.

Unter "spezifizierter Berst-Druckdifferenz" ist im vorliegenden Zusammenhang ein Druckdifferenzwert zwischen dem Innendruck des Behältnisses und dem ausserhalb des Behältnisses herrschenden Aussendruck zu verstehen, bei Vorliegen bzw. Überschreiten welchen Druckdifferenzwerts das Behältnis birst bzw. aufbricht, so dass sein Inhalt freigesetzt oder zugänglich wird. Jedes Behältnis ist für eine spezifizierte, d.h. herstellungsseitig vorgewählte Berst-Druckdifferenz ausgelegt, die fertigungstechnisch durch Materialwahl, Wandstärken, Formgebung und/oder Anbringung von Sollbruchstellen erreicht werden kann. Mit "spezifiziert" ist ferner auch gemeint, dass die Berst-Druckdifferenz eines jeden Behältnisses dem Anwender in irgendeiner Form bekannt bzw. bekannt gemacht sein muss, so dass die Behältnisse ihrer Berst-Druckdifferenz entsprechend korrekt eingesetzt bzw. die Reaktionsführung entsprechend abgestimmt werden können. Die Information über die spezifizierte Berst-Druckdifferenz muss dem Behältnis in geeigneter Form zugeordnet sein. Beispielsweise kann eine Information über die spezifizierte Berst-Druckdifferenz an den Behältnissen selbst angebracht sein, zum Beispiel als Markierung in Form eines Codes oder Klartexts. Alternativ kann die Information über die Berst-Druckdifferenz eines Behältnisses auch an einer Behältnisverpackung angebracht oder auf einem sonstigen Informationsträger zum Beispiel in der Behältnisverpackung vorhanden sein. Wesentlich ist lediglich, dass der Anwender eindeutig erkennen kann, für welche Berst-Druckdifferenz das jeweilige Behältnis ausgelegt ist.

Unter "gezielter Anwendung einer Druckdifferenz" im Reaktor wird im vorliegenden Zusammenhang die gezielte Erzeugung eines gegenüber dem Innendruck eines im Reaktor befindlichen Behältnisses höheren oder niedrigeren Drucks im Reaktor verstanden. Typischerweise handelt es sich dabei um einen höheren Druck (Überdruck), jedoch ist grundsätzlich auch das Anlegen von Unterdruck (Vakuum) möglich. Es ist z.B. auch möglich, dass die Behältnisse unter Druck verschlossen werden. So verschlossene (und daher unter Druck stehende) Behältnisse bersten unter sonst gleichen Bedingungen bei einem höheren Aussendruck bzw. bersten z.B. (eher) bei einem äusseren Unterdruck. Die in den nachfolgenden Ausfiihrungen beispielhaft erwähnten Druckwerte sind absolute Druckwerte, die entsprechenden Druckdifferenzwerte zu den Innendrücken der Behältnisse ergeben sich durch Abzug der Innendrücke. Letztere entsprechen in den meisten Fällen dem normalen Luftdruck.

Die gezielte Erzeugung eines bestimmten Drucks im Reaktor erfolgt typischerweise durch Beaufschlagung des Reaktors mit einem unter entsprechendem Druck stehenden Gas oder Gasgemisch unter Einsatz entsprechender, an sich bekannter Apparaturen, wobei das Gas oder Gasgemisch inert ist oder ggf. auch an der Reaktion beteiligt sein kann. Sofern der applizierte Druck in dieser Reaktionsphase nicht ohnehin für die Reaktion notwendig ist, genügt eine relativ kurzzeitige Beaufschlagung, welche ausreicht, das gewünschte Behältnis (bzw. alle für dieselbe Berst-Druckdifferenz ausgelegten Behältnisse) selektiv aufzubrechen. Die gezielte Druckerzeugung kann aber auch einen durch die Reaktion selbst im Reaktor entstandenen (autogenen) Druck ausnutzen bzw. einschliessen, wobei natürlich die Reaktionskinetik bekannt sein und die Berst-Druckdifferenz des Behältnisses entsprechend darauf abgestimmt sein muss. Der für die Erreichung der spezifizierten Berst-Druckdifferenz des Behältnisses erforderliche (Über-)Druck im Reaktor kann z.B. auch durch ggf. vorübergehendes gezieltes Erwärmen der Reaktionsmasse erzeugt werden, z.B. wenn keine äussere Druckbeaufschlagung durch ein Gas vorhanden bzw. möglich ist.

Nach dem Hauptgedanken des erfindungsgemässen Verfahrens erfolgt die Zudosierung bzw. Freisetzung der Substanz bzw. Substanzen druckinduziert, also durch gezielte Anwendung einer auf die spezifizierte Berst-Druckdifferenz des bzw. der die Substanz bzw. Substanzen enthaltenden Behältnisse abgestimmten Drucks im Reaktor, bei welchem Druck im Reaktor die Differenz zum Druck im Behältnis die spezifizierte Berst-Druckdifferenz des Behältnisses überschritten wird. Dieses Verfahren hat den Vorteil, dass die zuzudosierenden Substanzen bereits vor Reaktionsbeginn (innerhalb der noch verschlossenen Behältnisse) in den Reaktor eingebracht werden können und dort dann bereitgehalten werden, bis sie im Zuge des Reaktionsablaufs benötigt werden. Durch die Verwendung von Substanzbehältnissen, in die die Substanzen gasdicht eingeschlossen sind, ist auch die Zudosierung kleinster Substanzmengen sowie die Zudosierung hochsensitiver Substanzen völlig problemlos möglich. Durch die druckinduzierte Freisetzung der Substanzen kann der Reaktionsablauf lediglich durch Herstellung der erforderlichen Druckverhältnisse, aber ohne sonstige Eingriffe in den Reaktor auf einfachste Weise von aussen gewissermassen "ferngesteuert" werden.

Das erfindungsgemässe Verfahren hat insofern noch einen weiteren wichtigen Vorteil, als es ohne grossen apparativen Aufwand die Durchführung von echten Parallel-Reaktionen in einer praktisch unlimitierten Anzahl von Reaktoren ermöglicht. Alle für die Reaktionen erforderlichen Substanzen können bereits von Anfang an in die Reaktoren eingebracht werden, und die Zudosierung einzelner Substanzen zu Beginn der Reaktionen oder zu einem späteren Zeitpunkt des Reaktionsablaufs lässt sich sehr einfach durch Erzeugung entsprechend abgestimmter Druckverhältnisse bzw. -verläufe in den einzelnen Reaktoren steuern.

Weiters kann z.B. die "Qualitätskontrolle" bezüglich Quantität (der zuzudosierenden Menge Reagenz) und Qualität komplett von der Reaktion entkoppelt und vorgängig gemacht werden.

Ferner können sogenannte "Libraries" von Reagenzien und Bausteinen derart angelegt werden, dass erstmals in spezifischen Gebieten praktisch "ferngesteuerte" Reaktionen von der Planung bis zur Durchführung automatisch durchgeführt werden können und dies mit einem geringeren apparativen Aufwand als dies heutige Apparaturen zur Verfügung stellen ("Desktop Chemistry").

In einer allgemeinen, z.B. parallelen Synthese wird der erhöhte äussere Druck z.B. mit einem Inertgas, z.B. Argon, in einer ersten Phase zunächst einmal nur zu dem Zweck erzeugt, dass alle Reagenzien in z.B. zehn Reaktoren gleichzeitig freigesetzt werden, damit die Reaktionen alle zum gleichen Zeitpunkt starten. Zu einem späteren Zeitpunkt wird dann der Druck auf eine höhere Stufe gebracht, auf welcher dann in jedem Reaktor ein Behältnis aufbricht, welches eine Substanz enthält, das die jeweilige Reaktion stoppt, wobei dann alle Reaktionen gleichzeitig gestoppt werden. In diesem einfachen Beispiel ist das Problem "Scheduling" nicht nur gelöst, sondern ganz eliminiert.

In einer spezifischen Reaktion, wie z.B. der Polyolefin-Synthese, werden alle Reagenzien so in inerten erfindungsgemässen Behältnissen zugegeben, dass z.B. das Behältnis, welches einen Co-Katalysator (z.B. MAO) enthält, z.B. bei einem Ethylengasdruck (Reaktivgasdruck) von 10 bar die Substanz bzw. den Co-Katalysator freigibt. Der Katalysator wird dem Reaktor vor dem Start der Synthese in einem Behältnis zugegeben, welches z.B. bei 30 bar Ethylengasdruck birst und den Katalysator freigibt. Damit ist der Katalysator zwar von Anfang an technisch einfach lösbar im Substanzgemisch vorhanden, wird aber weder am Anfang der Reaktion noch bei 10 bar Ethylengasdruck, wo der Co-Katalysator freigegeben wird, freigesetzt, sondern ist bis zum Zeitpunkt der Druckerhöhung auf 30 bar mittels des Behältnisses, also gewissermassen einer inerten "Verpackung", von den anderen Reaktionspartnern sicher getrennt. In einem weiteren Reaktionsschritt soll z.B. zu einem bestimmten Zeitpunkt ein anderes Monomer in die Polymerkette eingebaut werden als das Reaktionsgasmolekül Ethylen. Dazu wird auch zu bzw. vor Beginn der Reaktion eine genau definierte Menge von z.B. Butadien in einem erfindungsgemässen Behältnis zugegeben, welches z.B. bei 40 bar Ethylengasdruck birst und dadurch die in ihm enthaltene Substanz freigibt. So kann irgendein Reagenz zu praktisch irgendeinem Zeitpunkt aber gezielt in die Reaktion eingeführt werden, ohne dass z.B. der Reaktor geöffnet werden müsste oder ohne sonstige grosse technische Vorkehrungen. Im weiteren kann die Qualitätskontrolle (z.B. bezüglich Dosierungsmengen) von der Reaktion entkoppelt werden, was weitere Vorteile bringt. Es kann auch ein Behältnis mit Gas, z.B. Propylen zugegeben werden. Die Reaktion kann bekanntermassen z.B. mit Ethanol (EtOH) gestoppt werden. Auch dies kann über ein erfindungsgemässes Behältnis mit einer Berst-Druckdifferenz von z.B. 60 bar gelöst werden. Damit können in parallelen Verfahren alle Reaktionen gleichzeitig gestoppt werden, ohne dass alle Reaktoren geöffnet werden müssen.

Schon aus diesen kurzen beispielsweisen Erläuterungen geht hervor, dass es durch die Erfindung (erstmals) möglich ist, sogar komplexe Reaktionen derart ablaufen zu lassen, dass alle Reagenzien vor Beginn der Reaktionen in eigenen Behältnissen derart in die Reaktoren zugegeben werden können, dass die Reaktionen anschliessend praktisch ohne Manipulation am Reaktor selbst programmgesteuert und in der parallelen Synthese ohne die geringsten Scheduling-Probleme durchgeführt werden können.

Vorzugsweise werden beim erfindungsgemässen Verfahren Behältnisse eingesetzt, die so ausgebildet sind, dass sie bei einem mindestens um die spezifizierte Berst-Druckdifferenz gegenüber ihrem jeweiligen Innendruck höheren Aussendruck aufbrechen, wobei das Aufbrechen der Behältnisse und damit die Freisetzung der in den Behältnissen befindlichen Substanzen druckinduziert durch gezielte Anwendung von auf die spezifizierten Berst-Druckdifferenzen der Behältnisse abgestimmten Überdrücken im Reaktor erfolgt. Das Aufbrechen der Behältnisse mit Überdrücken erlaubt weitere Druck-Bereiche und grössere Druckabstände als das Aufbrechen mit Unterdrücken.

Für gewisse Anwendungsfälle kann es aber durchaus vorteilhaft sein, dass ein Behältnis eine Substanz bei einem bestimmten (äusseren) Unterdruck freigibt. Ein Beispiel dafür ist die Qualitätskontrolle nach der Synthese eines Katalysators, der dazu bezüglich seiner Porosität (wichtige Grösse der aktiven Oberfläche) gemessen werden soll. Sobald der Katalysator mit Restluft oder Restfeuchtigkeit in Kontakt kommt, ist er in der Regel sofort zerstört und weist eine anders beschaffene Oberfläche auf. Daher ist es vorteilhaft, den Katalysator in einem erfindungsgemässen Behältnis (in genau definierter Menge) bereitzuhalten, wo er vorzugsweise unter einer Schutzgasatmosphäre sicher vor Luft und Feuchtigkeit bis zum Qualitätstest verbleiben kann. Die Messung der Porosität beruht vielfach auf einer zyklischen Anwendung von Vakuum und Stickstoff, wobei gemessen wird, wie viel Stickstoffmoleküle vom Katalysator absorbiert werden können. Für diesen Anwendungsfall ist es ideal, wenn das Aufbrechen des Behältnisses nicht durch äusseren Überdruck erfolgt, sondern das Behältnis genau beim ersten Anlegen eines Vakuum-Stosses birst und dadurch den Katalysator freigibt.

Gemäss einer vorteilhaften Ausführungsform liegen zwei oder mehrere gleiche oder unterschiedliche Substanzen in separaten Behältnissen mit unterschiedlichen Berst-Druckdifferenzen vor und werden durch gezielte Anwendung von auf die unterschiedlichen Berst-Druckdifferenzen angepassten Druckdifferenzen im Reaktor selektiv aus den jeweiligen Behältnissen freigesetzt. Selbstverständlich ist auch die gleichzeitige Zudosierung verschiedener Substanzen möglich, die aus welchen Gründen auch immer in separaten Behältnissen vorliegen bzw. vorliegen müssen. In diesem Fall müssen die betreffenden Behältnisse natürlich für dieselbe Berst-Druckdifferenz ausgelegt sein.

Es können auch genau definierte Substanzgemische in den Behältnissen vorliegen, wie z.B. Lösungen oder einfache Suspensionen.

Jede der zuzudosierenden Substanzen kann vorteilhafterweise auch je in zwei oder mehreren Behältnissen mit je vordefiniert, vorzugsweise moläquivalent abgemessenen, ggf. unterschiedlichen Substanzmengen vorliegen, wobei die die gleiche Substanz enthaltenden Behältnisse dann alle dieselbe Berst-Druckdifferenz aufweisen. Dies hat den Vorteil, dass die Dosiermenge dieser Substanzen sehr einfach durch Kombination passender Substanzbehältnisse eingestellt werden kann, so wie dies grundsätzlich in der eingangs genannten WO 02/13969 A1 im Detail beschrieben ist. Die vorliegende Erfindung schafft also gewissermassen eine Erweiterung um "dritte Dimension" zusätzlich zu den beiden "Dimensionen" Substanzart und Substanzmenge.

Vorteilhafterweise wird der Reaktionsablauf durch druckinduziertes selektives Aufbrechen des Behältnisses bzw. der Behältnisse und dadurch bewirktes selektives Freisetzen der im Behältnis bzw. den Behältnissen befindlichen Substanz bzw. Substanzen gesteuert. Dies hat den Vorteil eines geringen apparativen Aufwands und schafft die Möglichkeit, z.B. in der parallelen Synthese in allen Reaktoren eine oder sogar mehrere Substanzen. gleichzeitig freizusetzen, ohne dass jeder Reaktor z.B. eine Substanzpumpe mit den erwähnten grossen Einschränkungen aufweisen muss.

Bevorzugt werden dabei allenfalls mit Ausnahme von Reaktivgas oder Reaktivlösungsmittel sämtliche für die Reaktion erforderlichen Substanzen vor dem Start der Reaktion in den Reaktor eingebracht und die in einem Behältnis bzw. in Behältnissen vorliegende Substanz bzw. Substanzen entsprechend einem Reaktionsplan durch gezieltes druckinduziertes Aufbrechen des Behältnisses bzw. der Behältnisse freigesetzt. Auf diese Weise braucht der Reaktor nicht mehr geöffnet zu werden bzw. können aufwändige Massnahmen und Apparaturen zur Einbringung der Substanzen während des Reaktionsablaufs entfallen.

Bevorzugt werden Behältnisse mit abgestuften Berst-Druckdifferenzen im Bereich von einigen bar bis maximal einige Hundert bar eingesetzt werden. Besonders bevorzugte Berst-Druckdifferenzen liegen in den Bereichen von 1-10 bar, 10-30 bar, 30-70 bar und 70-100 oder 70-200 bar. Die Genauigkeit der Berst-Druckdifferenzen liegt bevorzugt im Bereich von 0.2-5 bar. Durch ausreichend weit auseinander liegende Berst-Druckdifferenzen der Behältnisse kann ein gezieltes und selektives Aufbrechen der jeweiligen Behältnisse sichergestellt werden.

Das erfindungsgemässe Verfahren ist besonders gut geeignet für solche Reaktionen, wo besonders hochsensitive Substanzen, insbesondere Katalysatoren, speziell homogene oder heterogene Katalysatoren zudosiert werden müssen. Bevorzugt wird das erfindungsgemässe Verfahren zur Durchführung von Polyolefin-Synthese-Reaktionen oder ähnliche Reaktionstechniken einsetzende Synthese-Verfahren eingesetzt. Auch für Hydrierungen ist das Verfahren vorteilhaft. Die mittels der Behältnisse zudosierten Substanzen können jedoch z.B. auch Ausgangsmaterialien, Starter, Acceleratoren, Co-Katalysatoren, Inhibitoren etc. sein.

Weitere bevorzugte Reaktionen im Rahmen des erfindungsgemässen Verfahrens sind Peptid-Synthesen, Festphasen-Reaktionen, insbesondere Festsphasen-Synthesen oder Reaktionen mit Festbett-Reaktoren, Festphasen/Gasphasen-Reaktionen und auch Analyse-Reaktionen, insbesondere in der hochreinen Analytik.

Gemäss einer vorteilhaften Ausgestaltung des erfindungsgemässen Verfahrens wird die chemische Reaktion in einem Durchfluss-Reaktor mit gasförmigem oder flüssigem Reaktionsmedium durchgeführt.

Eine weitere vorteilhafte Ausgestaltung des erfindungsgemässen Verfahrens besteht darin, dass die chemische Reaktion als eine Mehrzahl von Parallel-Reaktionen, insbesondere Parallel-Synthesen, und/oder im Split & Pool Verfahren durchgeführt wird.

Das erfindungsgemässe Verfahren ist besonders gut für die parallele Synthese geeignet. Nicht nur, dass die parallelen Reaktionen dabei "ferngesteuert" werden können oder nicht nur, weil dies bei entsprechenden vorhandenen Substanz-Libraries bequemer ist, auch nicht nur, weil die Automation damit einfacher ist, sondern vor allem löst das erfindungsgemässe Verfahren für die parallele Synthese und allgemein für parallele Experimente, wo das erfindungsgemässe Verfahren angewandt werden kann, das Problem des Scheduling komplett, indem es dieses überhaupt eliminiert. Damit kann das erfindungsgemässe Verfahren dem parallelen Experimentieren zum Durchbruch verhelfen, indem es eines der wichtigsten und schwierigsten Probleme praktisch komplett eliminiert. Dies ist ein besonders wichtiger Vorteil des erfindungsgemässen Verfahrens.

Nach einer bevorzugten Variante des erfindungsgemässen Verfahrens wird mindestens ein innerhalb eines Mantelbehälters angeordnetes Behältnis eingesetzt, wobei der Mantelbehälter zumindest teilweise gas- und/oder flüssigkeitsdurchlässig ausgebildet und relativ zum Behältnis stabiler ist, so dass er beim druckinduzierten Aufbrechen des in ihm befindlichen Behältnisses selbst nicht zerstört wird. Eventuell kann der Aussenbehälter sogar in einem weiteren Aussenbehälter "eingepackt" sein. Unter "stabiler" ist dabei gemeint, dass der Mantelbehälter höheren Drücken bzw. Druckdifferenzen standhalten kann als das in ihm befindliche Behältnis. Normalerweise ist der Aussenbehälter dazu dickwandiger. Da er nicht vollständig geschlossen ist und daher ein Druckausgleich stattfinden kann, reicht für die erhöhte Stabilität aber durchaus auch eine an sich "schwächere" bzw. dünnwandigere Ausbildung. Bei dieser Verfahrensvariante werden die beim Aufbrechen des Behältnisses entstandenen Bruchstücke im Mantelbehälter zurückgehalten. Die Substanz wird in z.B. gelöster Form in die Reaktionsmasse transferiert. Falls die im Behältnis befindliche Substanz ein fester Reaktionsträger ist, hat diese Variante den weiteren Vorteil, dass der Reaktionsträger im Mantelbehälter verbleibt und die Reaktion innerhalb des Mantelbehälters stattfindet.

Gemäss einer besonders vorteilhaften Ausgestaltung des erfindungsgemässen Verfahrens werden zwei oder mehrere je innerhalb eines Mantelbehälters angeordnete Behältnisse mit unterschiedlichen festen Substanzen eingesetzt, wobei je nach Substanz gleiche oder unterschiedliche Reaktionen bzw. Teilreaktionen innerhalb der einzelnen Mantelbehälter stattfinden.

Bei einer Polyolefin-Synthese ist es die Aufgabe des Katalysators, gelöste Ethylen-Moleküle in das zu bildende Polymer einzubauen. Da der Katalysator die Glasfritte (oder dgl.) des Mantelbehälters nicht passieren kann, bleibt das wachsende Polymer im Mantelbehälter "gefangen". Damit können z.B. auch mehrere solche Mantelbehältnisse in einem Reaktionsgefäss gleichzeitig eingesetzt werden unter den exakt gleichen Bedingungen. Dies erlaubt nicht nur eine praktisch absolute Vergleichbarkeit als Vorteil, sondern ermöglicht den Einsatz solcher erfindungsgemässer Behältnisse im sogenannten "Split & Pool Verfahren" z.B. in der Festphasen-Synthese oder (beim Einsatz von mittleren Peptiden als Startmaterial) auch Flüssigphasen-Synthese von Peptiden oder in der Festphasen Synthese allgemein. Auch sogenannte Scavenger-Reagenzien können auf ähnliche Weise eingesetzt werden. Ein erfindungsgemässes Behältnis mit Mantelbehälter eröffnet ganz neue Möglichkeiten bezüglich Durchsatz und Vergleichsqualität in der Forschung und Entwicklung neuartiger Katalysatoren, Substanzen oder Wirkstoffe.

Falls im inneren Behältnis eine im Reaktionsmedium lösbare Substanz vorhanden ist, kann die Durchlässigkeit der Fritte bzw. allgemeiner einer Membran auch derart gestaltet bzw. ausgelegt sein, dass die Substanz nicht auf einen Schlag, sondern über einen bestimmten Zeitraum dem Reaktionsgemisch zugegeben werden kann.

Ferner können derartig ummantelte Behältnisse direkt in sogenannten, entsprechend mit einer Zugabekammer ausgerüsteten Durchflussreaktoren ("Flow Reactors") derart eingesetzt werden, dass z.B. ein bestimmtes Katalysator-Setup im Behältnis ist, welches bei z.B. 10 bar aufbricht. Dieses mit einem Mantelbehälter versehene Behältnis wird nun in die Zugabekammer des Durchflussreaktors eingebracht (z.B. durch eine Türe desselben), wobei der Reaktionsfluss mit z.B. dem zu verändernden Molekül in der Phase, welche durch den Mantelbehälter fliesst, das (innere) Behältnis ab einem Druck von 10 bar zerspringen lässt, der Katalysator-Setup dadurch freigesetzt wird und der Reaktion zur Verfügung steht, ohne dass der Katalysator ausserhalb der Reaktionskammer je mit irgendeiner anderen Atmosphäre in Kontakt kommt.

Das erfindungsgemässe Konzept des Einsatzes von Substanzbehältnissen mit spezifizierten Berst-Druckdifferenzen erlaubt eine weitere vorteilhafte Weiterbildung, bei welcher zusätzlich mindestens ein Behältnis eingesetzt wird, das eine Substanz enthält, welche die chemische Reaktion stoppt, wobei die spezifizierte Berst-Druckdifferenz dieses Behältnisses höher ist als die spezifizierte Berst-Druckdifferenz aller anderen eingesetzten Behältnisse, aber kleiner oder zumindest nicht grösser ist als ein für die jeweiligen Reaktionsbedingungen zulässiger Maximaldruck. Der zulässige Maximaldruck ist dabei in der Regel durch die Beschaffenheit bzw. Konstruktion des Reaktors gegeben. Wenn der Druck im Reaktor z.B. im Falle von unerwartet exothermen "Run-away" Reaktionen in der Forschung nahe an den zulässigen Maximaldruck kommt, bricht das Behältnis auf und die dadurch freigesetzte Substanz stoppt die chemische Reaktion vollständig. Dieses eine reaktionsstoppende Substanz enthaltende Behältnis bildet ein einfaches, aber hochwirksames Sicherheitsdispositiv, das sich natürlich auch im Zusammenhang mit anderen Reaktionsverfahren einsetzen lässt. Das die betreffenden Substanz beinhaltende Behältnis bildet also gewissermassen eine reaktor-interne "Berstscheibe" und ist vorzugsweise auch mit einem gasabsorbierenden Effekt ausgestattet. Die interne "Berstscheibe" hat gegenüber den üblichen externen Berstscheiben, welche den Druck schnell nach aussen abgeben und als zusätzliche Sicherheit parallel eingestzt werden können, den weiteren Vorteil, dass nicht z.B. gefährliche Reagenzien in die Umgebung, auch nicht in den Kamin, abgegeben werden respektive eine zusätzliche Sicherheit vorgelagert ist. Im weiteren muss nach einem Akutfall keine Berstscheibe ersetzt werden.

Weitere vorteilhafte Verwendungen des Behältnisses sind im Bereich Porositäts- und Oberflächenmessung, oberflächenanalytische Untersuchungen, Partikelgrössenverteilungsmessungen, mikroskopische Untersuchungen und auch Lagerung.

Vorzugsweise sind die erfindungsgemässen Behältnisse so ausgebildet, dass ihre spezifizierten Berst-Druckdifferenzen in einem der für die Praxis relevanten Bereiche 1-10 bar, 10-30 bar, 30-70 bar, 70-100 bar oder 100-200 bar bei einer Genauigkeit (Toleranz) von vorzugsweise 0.2-5 bar liegen. Die spezifizierte Berst-Druckdifferenz wird dabei, wie schon erwähnt, vorzugsweise durch Materialwahl, Wandstärke, Formgebung und/oder durch Ausbildung und Anordnung von Sollbruchstellen festgelegt.

Gemäss einer vorteilhaften Weiterbildung ist das Behältnis innerhalb eines Mantelbehälters angeordnet, wobei der Mantelbehälter zumindest teilweise gas- und/oder flüssigkeitsdurchlässig und ferner so ausgebildet ist, dass er beim druckinduzierten Aufbrechen des in ihm befindlichen Behältnisses selbst nicht zerstört wird. Besonders bevorzugt ist der Mantelbehälter dabei mit mindestens einer Fritte oder einem funktionsäquivalenten Element ausgestattet.

Besonders bevorzugt ist der Mantelbehälter mit mindestens einer zusätzlichen, eine weitere chemische Substanz enthaltenden Kammer ausgestattet, welche über eine Fritte oder ein funktionsäquivalentes Element in gas- und/oder flüssigkeitskommunizierender Verbindung mit einer das Behältnis enthaltenden Kammer steht und für eine spezifizierte Berst-Druckdifferenz zwischen dem Druck in ihrem Inneren und dem Druck ausserhalb des Mantelbehältnisses ausgebildet ist, so dass sie unter Druckverhältnissen, die die spezifizierte Berst-Druckdifferenz überschreiten, aufbricht und die in ihr enthaltene Substanz freisetzt.

Ein Vorteil eines mit Fritten oder dgl. ausgerüsteten Behältnisses liegt darin, dass der Raum zwischen den Fritten ebenfalls luftdicht verschlossen ist und/oder eine weitere Substanz enthalten kann, welche sich zwischen den Fritten und dem inneren Behältnis befindet. Z.B. kann diese Substanz ein Co-Katalysator sein.

Die Markierung am Behältnis selbst oder an oder in einer Behältnis-Verpackung weist vorzugsweise die Form eines Codes oder die Form von Klartext auf.

Vorzugsweise umfasst das erfindungsgemässe Set Behältnisse mit unterschiedlichen Substanzen, wobei diese Behältnisse für gleiche und/oder unterschiedliche Berst-Druckdifferenzen ausgebildet sind. Im Falle von unterschiedlichen Berst-Druckdifferenzen sind die Behältnisse für vorzugsweise mindestens drei unterschiedliche Berst-Druckdifferenzen ausgebildet.

Das Set kann vorteilhafterweise auch Behältnisse mit gleichen Substanzen umfassen, wobei diese Behältnisse für unterschiedliche und/oder gleiche Berst-Druckdifferenzen ausgebildet sind. Im Falle von unterschiedlichen Berst-Druckdifferenzen sind die Behältnisse für vorzugsweise mindestens drei unterschiedliche Berst-Druckdifferenzen ausgebildet.

Ganz besonders bevorzugt umfasst das Set Behältnisse mit mengenmässig, vorzugsweise moläquivalent abgestuften Mengen gleicher Substanzen.

Besonders vorteilhaft ist es, wenn das Set eine Mehrzahl von Behältnissen umfasst, die sich durch ihre spezifizierte Berst-Druckdifferenz und/oder durch die in ihnen enthaltenen Substanzen und/oder die Mengen der in ihnen enthaltenen Substanzen unterscheiden. Dabei können vorteilhafterweise auch zwei oder mehrere Behältnisse gleichen Inhalts, gleicher Substanzmenge und gleicher Berst-Druckdifferenz vorhanden sein.

Besonders vorteilhaft ist ferner, wenn das Set eine Mehrzahl von Behältnissen mit mindestens drei, vorzugsweise mindestens vier verschiedenen Substanz-Füllmengenabstufungen umfasst.

Bevorzugt weisen die Behältnisse abgestufte Berst-Druckdifferenzen im Bereich von einigen bar bis maximal einige Hundert bar auf. Vorzugsweise ist mindestens eines der Behältnisse für eine Berst-Druckdifferenz im Bereich von 1-10 bar ausgebildet. Alternativ oder zusätzlich ist mindestens ein Behältnis für eine Berst-Druckdifferenz im Bereich von 10-30 bar ausgebildet. Weiter alternativ oder zusätzlich ist mindestens ein Behältnis für eine Berst-Druckdifferenz im Bereich von 30-70 bar ausgebildet. Weiter alternativ oder zusätzlich ist mindestens ein Behältnis für eine Berst-Druckdifferenz grösser 70 bar ausgebildet. Die Toleranzen für die Berst-Druckdifferenzen liegen dabei vorzugsweise im Bereich von 0.2-5 bar.

Gemäss einer zweckmässigen Ausführungsform sind zwei oder mehrere Behältnisse mit unterschiedlichen spezifizierten Berst-Druckdifferenzen in einander verschachtelt angeordnet. Dadurch kann in manchen Situationen, insbesondere im Zusammenhang mit verhältnismässig kleinen Reaktoren, Platz gespart werden. Ein inneres Behältnis kann auch so ausgebildet sein, dass dieses vor dem äusseren Behältnis birst und die Substanz innerhalb des noch verschlossenen äusseren Behältnisses freigibt und die Substanz mit der Substanz im äusseren Behältnis reagiert, bevor das Produkt durch gezieltes Aufbrechen des äusseren Behältnisses in das Reaktionsgemisch im Reaktor freigesetzt wird (z.B. isolierte in-situ Bildung von Katalysatoren oder Zwischenstufen, ohne dass die Reaktion im Reaktionsmedium stattfinden muss und ohne dass der Reaktor diesbezüglich geöffnet werden muss).

Gemäss einer bevorzugten Weiterbildung sind die oder einige der Substanz enthaltenden Behältnisse des erfindungsgemässen Sets je innerhalb eines Mantelbehälters angeordnet, wobei die Mantelbehälter relativ zu den Behältnissen stabiler und zumindest teilweise gas- und flüssigkeitsdurchlässig ausgebildet sind. Vorteilhafterweise sind die Mantelbehälter dabei mit einer Fritte oder einem funktionsäquivalenten Element ausgestattet. Die Vorteile solcher Behältnisse mit Mantelbehälter sind schon im Zusammenhang mit diesen selbst erläutert worden.

Besonders vorteilhaft ist ferner, wenn die Markierungen an den Behältnissen selbst oder an oder in einer Behältnis-Verpackung die Form eines Codes oder die Form von Klartext aufweisen.

Ein Behältnis der vorstehend beschriebenen erfindungsgemässen Art lässt sich nach einem weiteren Aspekt der Erfindung auch zum Unterbrechen einer in einem Reaktor ablaufenden chemischen Reaktion verwenden, wobei das während der Reaktion im Reaktor befindliche Behältnis eine die Reaktion stoppende Substanz enthält und das Behältnis für einen spezifizierten Berst-Druck ausgebildet ist, der nicht grösser ist als ein für die jeweiligen Reaktionsbedingungen zulässiger Maximaldruck.

Im Folgenden wird die Erfindung unter Bezugnahme auf die beigefügten Zeichnungen anhand von verschiedenen Ausführungsbeispielen detaillierter beschrieben. Es zeigen:
- Fig. 1 -: eine schematische Darstellung eines beispielsweisen geöffneten Reaktors mit vier darin befindlichen, je eine Substanz enthaltenden Behältnissen im noch gasdicht verschlossenen Zustand,
- Fig. 2 -: eine schematische Darstellung des Reaktors im geschlossenen Zustand mit darin befindlichen Behältnissen, von denen eines durch Druckbeaufschlagung bereits geborsten ist und die in ihm befindliche Substanz freigesetzt hat,
- Fig. 3 -: eine schematische Darstellung des geschlossenen Reaktors mit darin befindlichen Behältnissen, die bereits alle bei einem im Vergleich zu Fig. 2 höheren Druck geborsten sind und die in ihnen befindlichen Substanzen freigesetzt haben,
- Fig. 4a-g: vereinfacht dargestellte Ansichten von sieben verschiedenen Ausführungsformen von Substanz enthaltenden erfindungsgemässen Behältnissen,
- Fig. 5a-c: Ansichten von drei weiteren Ausführungsformen von erfindungsgemässen Behältnissen,
- Fig. 6a-c: Schnittdarstellungen von drei weiter abgewandelten Ausführungsformen von erfindungsgemässen Behältnissen,
- Fig. 7: ein vereinfachtes Schema zur Verdeutlichung einer Parallel-Reaktion,
- Fig. 8: eine prinzipielle Schnittdarstellung eines Durchflussreaktors,
- Fig. 9: ein vereinfachtes Schema zur Erläuterung eines Split & Pool Verfahrens und
- Fig. 10: eine Skizze zur Erläuterung eines erfindungsgemässen Sets von Behältnissen.

Für die nachstehende Beschreibung gilt die folgende Festlegung: Sind in einer Figur zum Zweck zeichnerischer Eindeutigkeit Bezugszeichen angegeben, aber im unmittelbar zugehörigen Beschreibungsteil nicht erwähnt, so wird auf deren Erläuterung in vorangehenden oder nachfolgenden Beschreibungsteilen verwiesen. Umgekehrt sind zur Vermeidung zeichnerischer Überladung für das unmittelbare Verständnis weniger relevante Bezugszeichen nicht in allen Figuren eingetragen. Hierzu wird auf die jeweils übrigen Figuren verwiesen.

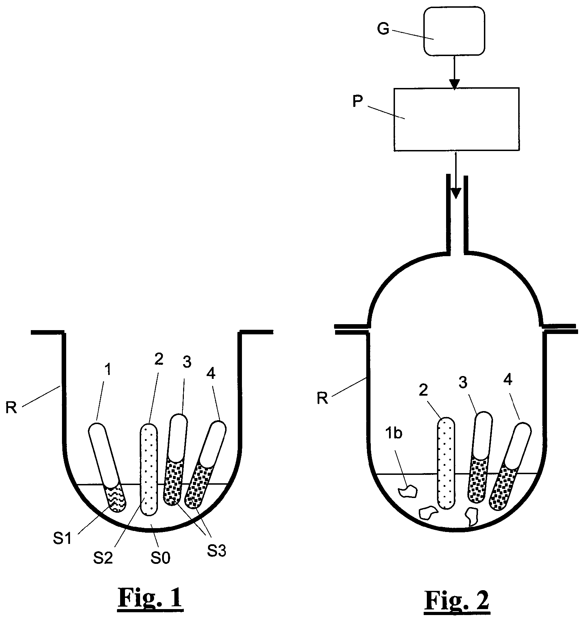

In einem in Figur 1 in offenem Zustand dargestellten beispielsweisen Reaktor R befinden sich eine konventionell eingebrachte flüssige Substanz S0 und vier vorerst noch gasdicht verschlossene Behältnisse 1-4, wobei das Behältnis 1 beispielsweise eine flüssige Substanz S1, das Behältnis 2 eine gasförmige Substanz S2 und die Behältnisse 3 und 4 je eine feste Substanz S3 enthält. Die Substanz in den Behältnissen 3 und 4 ist dieselbe, jedoch in unterschiedlichen (oder auch gleichen) Mengen. Die nicht von der jeweiligen Substanz S2 bzw. S3 eingenommenen Volumensteile der Behältnisse 2-4 sind mit einem Inertgas oder einem sonst mit der durchzuführenden Reaktion verträglichen Gas oder Gasgemisch gefüllt. Anstelle nur jeweils eines Behältnisses können für jede der drei Substanzen S1-S3 auch jeweils mehrere Behältnisse 1-4 eingesetzt werden, die jeweils zusammen die für die durchzuführende Reaktion benötigte Substanzmenge enthalten. Die festen, flüssigen und/oder gasförmigen Substanzen sind die Ausgangsmaterialien für die durchzuführende Reaktion sowie ggf. Katalysatoren, Starter, Beschleuniger und/oder Inhibitoren. Die Substanz S0 kann auch in einem oder mehreren eigenen Behältnis(sen) eingebracht worden sein, das bzw. die direkt beim Einbringen in den Reaktor R oder unmittelbar danach auf irgendeine Weise (z.B. ebenfalls unter einem bestimmten Druck) aufgebrochen wurde(n). Darauf wird hier nicht näher eingegangen. Die Substanz S0 kann je nach durchzuführender Reaktion auch gänzlich fehlen, d.h., dass anfänglich alle für die Reaktion erforderlichen Substanzen in zunächst noch geschlossenen Behältnissen im Reaktor vorliegen. Ferner kann auch ein Gas beaufschlagt werden und die Reaktion darin durchgeführt werden, und das Gas kann z.B. sogar selbst ein weiterer für die Reaktion benötigter Baustein sein (z.B. Propylengas in Polyolefin Synthesen).

Die Behältnisse 1-4 bestehen aus einem reaktionsinerten Material, typischerweise Glas. Die Herstellung der Behältnisse, ihre Befüllung mit Substanz und ihre gasdichte Verschliessung erfolgen auf an sich bekannte Weise, beispielsweise etwa so, wie es in der eingangs genannten WO 02/13969 A1 in aller Ausführlichkeit beschrieben ist. Vorzugsweise wird zum Zuschmelzen sehr dünnwandiger Behältnisse eine LaserEinrichtung eingesetzt.

Die Behältnisse 1-4 sind durch geeignete Materialwahl, Bemessung der Wandstärken, Formgebung und ggf. auch durch Sollbruchstellen herstellungsseitig auf unterschiedliche spezifizierte Berst-Druckdifferenzen ausgelegt. Was darunter zu verstehen ist, wurde bereits weiter oben ausführlich dargelegt.

Nachdem der Reaktor wie in Fig. 2 dargestellt geschlossen ist, wird er mit einem für die durchzuführende Reaktion geeigneten bzw. benötigten Gas bzw. Gasgemisch beaufschlagt. Das Gas bzw. Gasgemisch wird in an sich bekannter Weise mittels eines vorzugsweise rechnergesteuerten Druckreglers P aus einem Gasvorratsbehälter G zugeführt.

Alternativ, falls die Reaktion dies zulässt oder gar erfordert, kann auch die Temperatur erhöht werden. Z.B. durch verdampfendes Lösungsmittel wird der Druck ebenfalls kontinuierlich erhöht und über die Temperatur-Druckkurve relativ genau gesteuert.

Nun wird im Reaktor entweder gleich zu Beginn oder zu einem anderen gewünschten, z.B. durch einen Reaktionsplan vorgegebenen Zeitpunkt mittels des Druckreglers P gezielt ein Druckzustand (Überdruck) erzeugt, der ausreicht, selektiv das Behältnis (bzw. die Behältnisse) mit der niedrigsten spezifizierten Berst-Druckdifferenz zum Bersten zu bringen, die anderen Behältnisse mit höheren Berst-Druckdifferenzen dabei jedoch nicht beschädigt werden. In Fig. 2 wurde das Behältnis 1 auf diese Weise aufgebrochen und die in ihm enthaltene Substanz S1 freigesetzt. Die beim Aufbrechen (Bersten) des Behältnisses 1 entstandenen Bruchstücke des Behältnisses sind in Fig. 2 mit 1b bezeichnet.

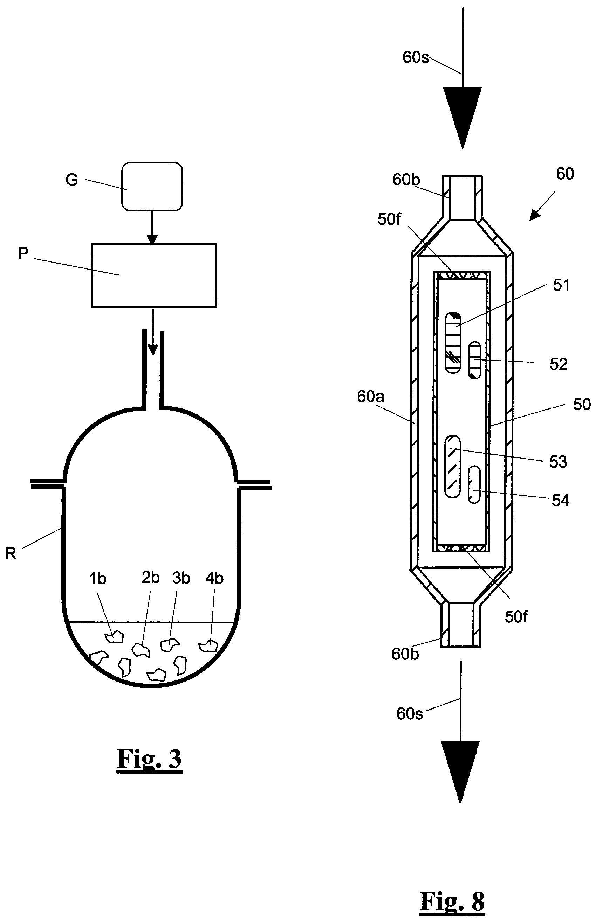

Mit fortschreitendem Reaktionsverlauf werden auf dieselbe Weise durch gezielte Applikation von Druck ausreichender Höhe schrittweise und selektiv auch die noch verbliebenen Behältnisse aufgebrochen und die darin befindlichen Substanzen freigesetzt, so dass sie an der Reaktion teilnehmen oder diese beeinflussen können. In Fig. 3 ist der Endzustand dargestellt, bei dem alle Behältnisse aufgebrochen sind. Die Bruchstücke der Behältnisse 1-4 sind dabei mit 1b, 2b, 3b und 4b bezeichnet.

Ein repräsentatives Beispiel einer nach dem erfindungsgemässen Verfahren durchgeführten Reaktion ist eine Polyolefin-Synthese mit folgender Reaktionsführung, wobei der Reaktor während der Reaktion nicht mehr geöffnet werden muss und kein weiteres Reagenz oder sonstige Substanz ausser der ohnehin erforderlichen Druckbeaufschlagung z.B. mit Ethylen-Gas (erstes Monomer) zugegeben werden muss:
Schritt 1: Beschickung des Reaktors mit 6 Behältnissen, von denen die ersten zwei mit gleicher erster Berst-Druckdifferenz einen Co-Katalysator (z.B. x mg bzw. x*0.6 mg MAO), ein drittes und ein viertes mit ebenfalls gleicher zweiter (höherer) Berst-Druckdifferenz einen (Haupt-)Katalysator (z.B. x mg bzw. x*0.2 mg), ein fünftes mit einer noch höheren dritten Berst-Druckdifferenz ein (zum ersten Monomer Ethylen-Gas zusätzliches) zweites Monomer (z.B. Butadien) und ein sechstes mit wiederum noch höherer vierter Berst-Druckdifferenz eine Quench-Substanz (z.B x*10 mg EtOH) enthält. (Der Faktor x ist hier eine beliebige Zahl.)
Schritt 2: Beaufschlagung des Reaktors mit dem ersten Monomer Ethylen-Gas und Einstellung des Drucks auf z.B. 10 bar.
Schritt 3: Unter dem Druck von 10 bar brechen die beiden ersten Behältnisse auf und setzen den Co-Katalysator MAO in den Reaktor frei.
Schritt 4: 2 Minuten warten.
Schritt 5: Erhöhung des Drucks auf ca. 30 bar.
Schritt 6: Unter dem Druck von 30 bar brechen das dritte und das vierte Behältnis auf und setzen den (Haupt-)Katalysator frei.
Schritt 7: 5 Minuten warten, bis sich der aktive Katalysator (Katalysator + Co-Katalysator) gebildet hat.
Schritt 8: Vorübergehende Erhöhung des Drucks für 1 Minute auf ca. 45 bar.
Schritt 9: Unter dem kurzzeitig erhöhten Druck von 45 bar bricht das fünfte Behältnis mit dem zweiten Monomer in einer genau bestimmten, diskreten Menge auf und setzt dieses in den Reaktor frei.
Schritt 10: Reduzierung des Drucks auf 30 bar.
Schritt 11: 60 Minuten warten.
Schritt 12: Vorübergehende Erhöhung des Drucks auf ca. 60 bar für ca. 1 Minute.
Schritt 13. Das sechste Behältnis bricht durch den auf 60 bar erhöhten Druck auf und setzt die in ihm enthaltene Quench-Substanz frei. Dadurch wird die laufende Reaktion praktisch augenblicklich abgebrochen ("gequencht").
Schritt 14: Reduzierung des Drucks auf Umgebungsdruck und Fortsetzung des Verfahrens nach an sich bekanntem Standard-Vorgehen.

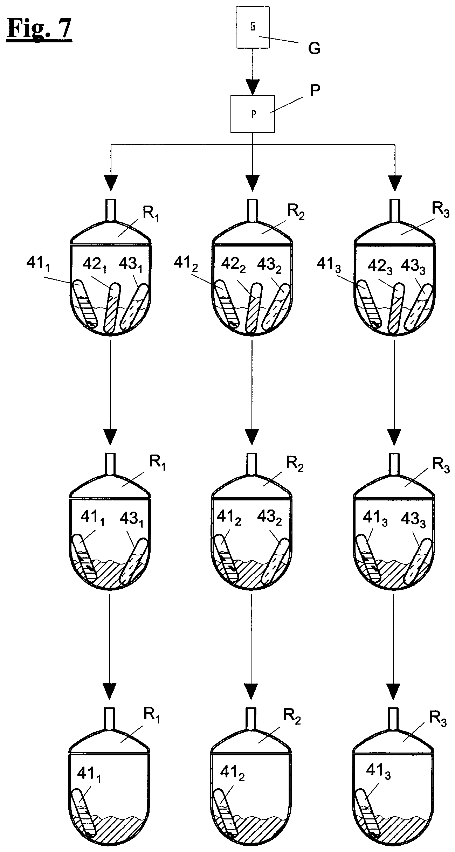

Die Fig. 7 illustriert schematisch eine beispielsweise Parallel-Reaktion unter Einsatz von drei Reaktoren, die mit R₁, R₂ und R₃ bezeichnet sind. Die drei Reaktoren werden analog dem Beispiel der Figuren 1-3 mit Reaktionsgas aus einer gemeinsamen Gasquelle G beaufschlagt, wobei der Druck des Reaktionsgases von einer Drucksteuerung P für alle drei Reaktoren gemeinsam geregelt wird. In den drei Reaktoren herrschen also jeweils die gleichen Druckverhältnisse.

Analog zum Beispiel der Figuren 1-3 werden die Reaktoren zunächst mit (hier z.B.) drei jeweils Substanz enthaltenden Behältnissen 41₁, 42₁, 43₁ bzw. 42₁, 42₂, 43₂ bzw 43₁, 43₂, 43₃ beschickt (zu oberst dargestellte Reaktorreihe). Dann wird zu einem bestimmten Zeitpunkt in allen drei Reaktoren der Druck so weit erhöht, bis je eines der je drei Behältnisse aufbricht und die in ihm enthaltene Substanz in den Reaktor freisetzt (in der Mitte dargestellte Reaktorreihe). In einem späteren Schritt wird der Druck in allen drei Reaktoren nochmals erhöht, bis je ein zweites der drei Behältnisse aufbricht (zu unterst dargestellte Reaktorreihe). Diese Vorgehensweise wird so lange fortgesetzt, bis alle Behältnisse aufgebrochen sind und die in ihnen enthaltenen Substanzen freigesetzt haben.

Die schon weiter vorne beschriebenen Vorteile bei einer parallelen Durchführung von Reaktionen werden sofort evident. Das Scheduling-Problem entfällt, da alle Reaktoren schon vor den Reaktionen mit Substanzbehältnissen beschickt werden können und die Reaktionen dann in allen Reaktoren gleichzeitig oder individuell gleichermassen einfach (durch zentrale Drucksteuerung) geführt werden können.

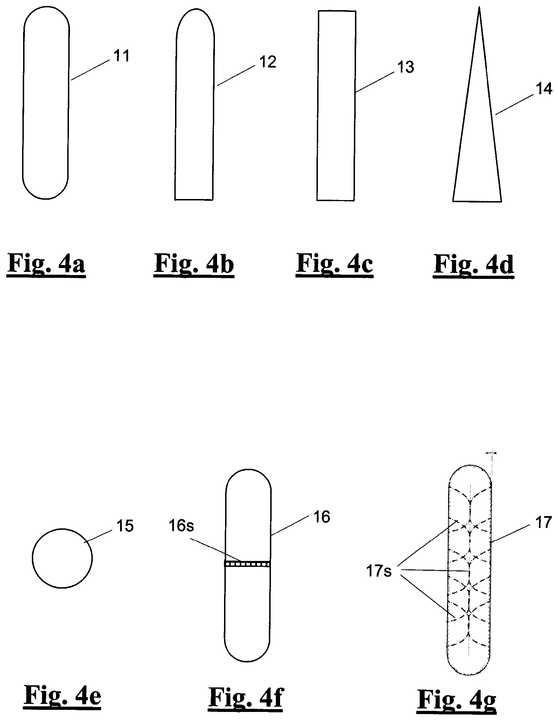

Die Figuren 4a-4g zeigen verschiedene mögliche Ausführungsformen von Substanzen enthaltenden Behältnissen 11-17. Aus praktischen Gründen sind die Behältnisse in der Regel länglich ausgebildet (Figuren 4a-4d und 4f-4g), können aber auch kugelförmig sein (Fig. 4e). Das Behältnis 11 der Fig. 4a ist zylindrisch mit zwei abgerundeten Enden. Das Behältnis 12 der Figur 4b ist ebenfalls zylindrisch, hat aber ein abgerundetes und ein flaches Ende. Das Behältnis 13 der Figur 4c ist zylindrisch mit zwei flachen Enden oder quadrisch mit sechs ebenen Wänden. Das Behältnis 14 der Fig. 4d ist kegel- oder pyramidenförmig ausgebildet. Das Behältnis 15 der Fig. 4e ist kugelförmig. Allen Behältnissen 11-15 der Figuren 4a-4e ist gemeinsam, dass sie eine im wesentlichen konstante bzw. homogene Wandstärke aufweisen, die auch ihre Berst-Druckdifferenz mit bestimmt, wobei Formen mit flachen Wandteilen bzw. scharfen Kanten bei sonst gleicher Beschaffenheit der Wände im allgemeinen eine niedrigere Berst-Druckdifferenz aufweisen als Formen mit runden Flächen und abgerundeten Enden. Dies ermöglicht auf einfache Weise die Realisierung unterschiedlicher Berst-Druckdifferenzen. Typische Wandstärken bewegen sich je nach gewünschter spezifizierten Berst-Druckdifferenz im Bereich von 0.03 mm bis etwa 2 mm, wobei (mit dem Konstruktionsmaterial Glas) ein Berst-Druckdifferenz-Bereich von einigen wenigen bar bis hinauf zu über 100-150 bar und ggf. noch höher abgedeckt werden kann. Dabei spielt auch die Grösse der Behältnisse im Vergleich zur Wandstärke eine Rolle. Bei grösseren Behältnissen kann die Wandstärke für höhere Berst-Druckdifferenzen mehrere mm betragen. Ein typisches Behältnis mit einer Berst-Druckdifferenz von rund 6 bar besitzt die Gestalt gem. Fig. 4a, ist dabei ca. 50 mm lang, ca. 10 mm dick und hat eine Wandstärke von etwa 0.05 mm.

Die Figuren 4f und 4g zeigen zwei alternative Behältnisse 16 und 17 mit grösseren Wandstärken (etwa 0.2 mm), die mit einer (Fig. 4f) bzw. mehreren (Fig. 4g) Sollbruchstellen 16s bzw. 17s versehen sind. Ohne Sollbruchstellen würden diese Behältnisse bei Differenzdrücken im Bereich von > 100 bar platzen. Die Sollbruchstellen sind jedoch so ausgebildet, dass die Behältnis bereits bei wesentlich niedrigeren Überdrücken von z.B. etwa 10 bar bersten. Selbstverständlich kann durch geeignete Ausbildung der Sollbruchstellen auch jede andere, höhere oder niedrigere Berst-Druckdifferenz eingestellt werden. Das mit nur einer mittig angeordneten Sollbruchstelle 16s versehene Behältnis 16 zerbricht normalerweise in zwei Hälften. Bei mehreren Sollbruchstellen wie beim Behältnis 17 der Fig. 4g entstehen kleinere Bruchstücke mit keinen oder keinen nennenswerten Kavitäten, damit eine Substanz schnell oder sehr schnell beim Bersten dem Reaktionsmedium zugeführt wird. Oder damit mehr oder weniger temporäre Konzentrationen auftreten.

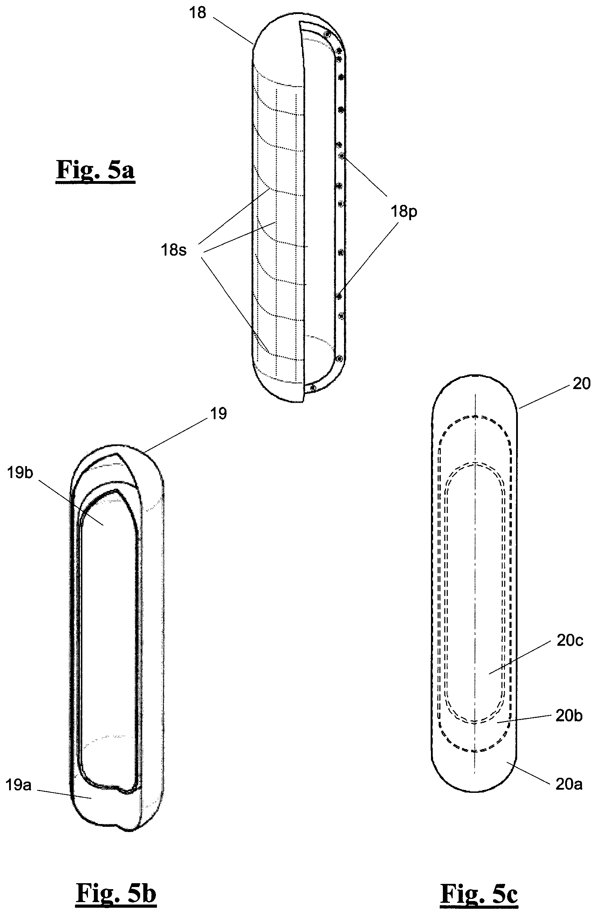

Die Figur 5a zeigt ein speziell ausgebildetes Behältnis 18. Äusserlich hat das Behältnis 18 eine ähnliche Gestalt wie die Behältnisse 16 und 17 der Figuren 4f und 4g und weist auch Sollbruchlinien 18s auf. In die etwas dickere Behältniswand sind jedoch glasumhüllte Stahlperlen 18p eingeschmolzen, die so verteilt sind, dass nach dem Bersten des Behältnisses in jedem Bruchstück mindestens eine (glasumhüllte) Stahlperle vorhanden ist. Dadurch können die Bruchstücke einfach mittels eines Magneten aus der Reaktionsmasse entfernt werden, die sonst übliche Filterung entfällt.

Bei den in den Figuren 5b und 5c dargestellten Behältnissen 19 und 20 sind jeweils zwei bzw. drei Behältnisse 19a und 19b bzw. 20a, 20b und 20c in einander geschachtelt angeordnet, wobei die einzelnen Behältnisse einerseits jeweils unterschiedliche Substanzen enthalten und anderseits für jeweils unterschiedliche Berst-Druckdifferenzen ausgelegt sind, so dass die einzelnen Behältnisse auch bei diesen Varianten selektiv aufgebrochen werden können. In Figur 5c hat beispielsweise das innerste Behältnis 20c die grösste Wandstärke und das äusserste Behältnis 20a die geringste Wandstärke. Selbstverständlich können auch diese Behältnisse mit Sollbruchstellen ausgebildet sein.

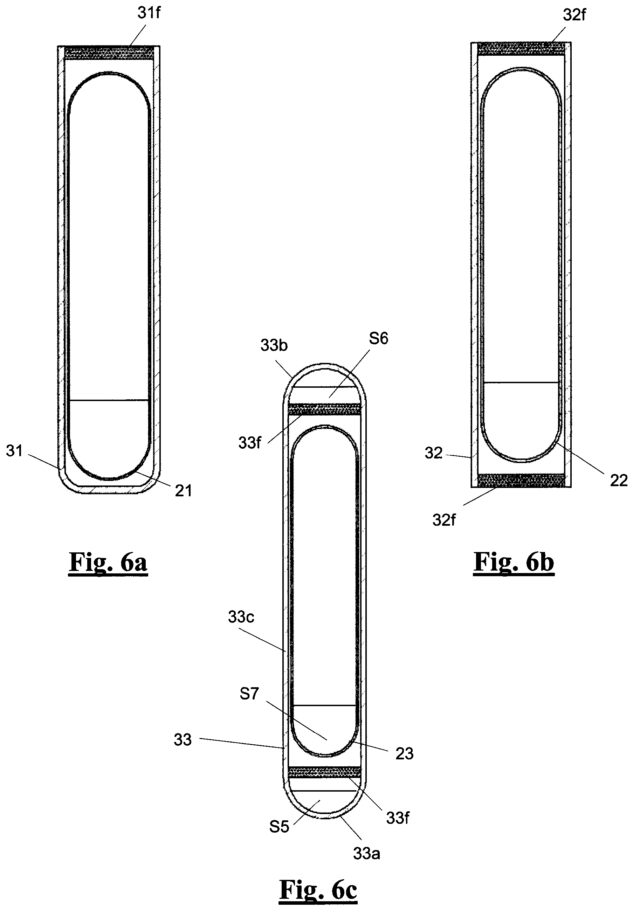

Die Figuren 6a und 6b zeigen eine weitere wichtige Abwandlung eines erfindungsgemässen Substanzbehälters. Hierbei ist das eigentliche, die Substanz enthaltende Behältnis 21 bzw. 22 innerhalb eines Mantelbehälters 31 bzw. 32 angeordnet. Der Mantelbehälter 31 bzw 32 ist bez. seiner Stabilität so ausgebildet, dass er beim druckinduzierten Aufbrechen des in ihm befindlichen Behältnisses 21 selbst nicht zerstört wird. Der Mantelbehälter 31 bzw. 32 ist also gegenüber dem in ihm befindlichen Behältnis 21 bzw. 22 stabiler ausgebildet, d.h. er kann höheren Drücken standhalten als das betreffende Behältnis 21 bzw. 22, respektive hält praktisch jedem Druck stand, weil er offen ist und somit ein Druckausgleich stattfinden kann. Demzufolge bleibt der Mantelbehälter (bei genügender Stabilität) intakt, wenn das in ihm befindliche Behältnis druckinduziert aufgebrochen wird. Der Mantelbehälter 31 bzw. 32 ist in Teilbereichen gas- und/oder flüssigkeitsdurchlässig ausgebildet. Dies kann z.B. durch eine Fritte 31f bzw. zwei integrierte Fritten 32f implementiert sein. Anstelle von Fritten können auch funktionsäquivalente Elemente wie z.B. eine Membrane vorgesehen sein, welche einen Gas- und/oder Flüssigkeitsaustausch zulassen, (eine bestimmte Grösse übersteigende) Feststoffpartikel jedoch zurückhalten, aber auch suspendierte Feststoffe unterhalb einer bestimmten Grösse (z.B. Nanopartikel) durchlassen.

Der Einsatz solcher Substanzbehälter hat den Vorteil, dass die nach der druckinduzierten Zerstörung der inneren, die Substanzen enthaltenden Behältnisse deren Bruchstücke im Mantelbehälter zurückgehalten und so einfach aus der Reaktionsmasse entfernt werden können, so dass eine sonst erforderliche Filterung oder sonstige Abtrennung der Bruchstücke entfällt. Dabei wird die lösliche oder in feinen Partikeln suspendierte Substanz durch die Fritten dem Reaktionsmedium zugeführt (und allenfalls umgekehrt).

Mit Membranen ausgestattete Substanzbehälter können Edelmetall-Katalysen durchgeführt werden, wobei das Produkt nicht mit dem Edelmetall verunreinigt wird und das Edelmetall einfach zurückgewonnen werden kann.

Falls die inneren Behältnisse als Substanz einen festen Reaktionsträger enthalten, ergibt sich noch ein weiterer Vorteil insofern, als dann die Reaktion innerhalb der Mantelbehälter abläuft, also quasi in einer chemischen Zelle. Im schon weiter vorne angesprochenen Split & Pool Verfahren können so Dutzende oder Hunderte von z.B. Katalysatoren getestet oder Peptide synthetisiert werden. Der Mantelbehälter ist dabei vorzugsweise mit einem eingravierten Bar Code versehen, der Aufschluss über die enthaltenen Substanzen gibt.

In Fig. 6c ist eine Abwandlung eines Substanzbehälters analog Figuren 6a und 6b dargestellt, bei dem der Mantelbehälter 33 allseitig geschlossen ist. Der Mantelbehälter 33 umfasst einen mittleren zylindrischen Abschnitt 33c und zwei domförmige Endabschnitte 33a und 33b. An den beiden Enden des mittleren Abschnitts befinden sich zwei Fritten (oder funktionsäquivalente Elemente) 33f, die den Innenraum des Mantelbehälters in drei Kammern unterteilen, welche über die Fritten in gas- und/oder flüssigkeitskommunizierender Verbindung stehen. Die durch den mittleren Abschnitt 33c gebildete Kammer nimmt ein durch gezielte Druckanwendung aufbrechbares Behältnis 23 auf. In den beiden durch die domförmigen Abschnitte 33a und 33b gebildeten Kammern befindet sich je eine weitere Substanz S5 bzw. S6, die mit der im inneren Behältnis 23 befindlichen Substanz S7 reagiert, wenn diese durch druckinduziertes Aufbrechen des inneren Behältnisses freigesetzt wird, und zwar ohne Kontakt mit dem Reaktionsmedium im Reaktor. Dieser Substanzbehälter bildet also de facto einen eigenständigen (Sub)-Reaktor. Durch Einsatz mehrerer solcher Sub-Reaktoren mit verschiedenem Inhalt können verschiedene Reaktionen parallel durchgeführt werden, und zwar z.B. alle zusammen in einem entsprechend grossen Reaktor. Damit können Split & Pool Reaktionen auf eine ganz neue Art und für ganz neue Reaktionen durchgeführt werden. Der Mantelbehälter 33 ist ferner so ausgebildet, dass die beiden domförmigen Endabschnitte 33a und 33b analog zum inneren Behältnis 23 durch Druckanwendung aufgebrochen werden können, wobei der mittlere Abschnitt 33c des Mantelbehälters (zusammen mit den Fritten 33f) aber intakt bleibt. Dann kann ein Austausch zwischen dem im Mantelbehälter erzeugten Reaktionsgemisch und dem Reaktionsgemisch im Reaktor stattfinden, so wie dies z.B. beim Behältnis der Fig. 6b der Fall ist.

In einer weiteren Abwandlung können innerhalb gemeinsamen Mantelbehälters auch zwei oder mehrere Substanz-Behältnisse angeordnet sein.

Ein mit einem Mantelbehälter ausgestattetes Behältnis analog dem in Fig. 6b lässt sich besonders vorteilhaft für die Durchführung von Reaktionen in einem Durchfluss-Reaktor einsetzen, so wie dies anhand der Fig. 8 beispielsweise schematisch dargestellt ist.

Ein als Ganzes mit 60 bezeichneter Durchfluss-Reaktor umfasst eine im Wesentlichen rohrförmige Reaktionskammer 60a, die über zwei Leitungsanschlüsse 60b in einen durch Pfeile 60s symbolisierten Reaktionsgasstrom eingeschleift ist. In der Reaktionskammer 60a befindet sich ein z.B. zylindrischer Mantelbehälter 50, der an seinen beiden Enden z.B. durch Fritten 50f verschlossen ist, so dass er vom Reaktionsgas durchströmt werden kann. Der Mantelbehälter 50 wurde durch eine hier nicht dargestellte Zugangsöffnung in der Reaktionskammer 60a in diese eingebracht.

Im Inneren des Mantelbehälters 50 befinden sich hier z.B. vier Behältnisse 51-54 mit je einer chemischen Substanz, z.B. einem Reaktionsträger oder Katalysator oder Co-Katalysator. Die Behältnisse 51-54 werden durch einen oder mehrere Druckstösse oder generell durch Druckerhöhung des Reaktionsgases je nach durchzuführender Reaktion gleichzeitig oder zu verschiedenen Zeitpunkten aufgebrochen und dadurch die Reaktion in Gang gesetzt oder beeinflusst. Das Reaktionsprodukt verbleibt im Mantelbehälter 50, der dann zu gegebener Zeit wieder aus der Reaktionskammer 60a entnommen wird.

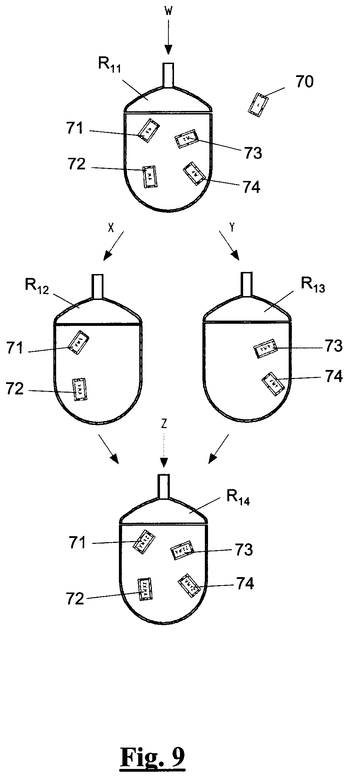

Die Fig. 9 illustriert schematisch ein einfaches Beispiel eines sogenannten Split & Pool Verfahrens, in welchem Mantelbehälter der vorstehend beschriebenen Art als chemische Zellen eingesetzt sind..

Es kommen hier (in diesem Beispiel) vier Reaktoren R₁₁, R₁₂, R₁₃ und R₁₄ zum Einsatz. Im ersten Reaktor R₁₁ befinden sich z.B. vier Mantelbehälter 71-74 analog dem in Fig. 8 gezeigten Mantelbehälter 50 mit einem oder mehreren Substanzbehältnissen, die hier im bereits aufgebrochenen Zustand dargestellt sind. Dem Reaktor wird eine Substanz W zugeführt. Vor der Umsetzung mit der Substanz W befindet sich in den Mantelbehältern 71-74 z.B. ein in Bildung begriffenes Polymer, das. (u.a.) Moleküle V enthält. Ein einzelnes solches Mantelbehältnis ist in Fig. 9 separat dargestellt und mit 70 bezeichnet. Durch die Reaktion im Reaktor R₁₁ wird in das Polymer ein Molekül W eingebaut, so dass die Polymere in den Mantelbehältern 71-74 schliesslich alle Moleküle V und W enthalten.

Im nächsten Schritt werden die vier Mantelbehälter 71-74 auf die beiden Reaktoren R₁₂ und R₁₃ aufgeteilt, wobei die Mantelbehälter 71 und 72 in den Reaktor R₁₂ und die Mantelbehälter 73 und 74 in den Reaktor R₁₃ eingebracht werden. Den beiden Reaktoren werden unterschiedliche Substanzen X und Y zugeführt und diese in die Polymere in den jeweiligen Mantelbehältern 71-72 bzw. 73-74 eingebaut, so dass die Mantelbehälter 71-72 schliesslich Polymere mit den Molekülen V, W und X und die Mantelbehälter 73-74 Polymere mit den Molekülen V, W und Y enthalten. Die Aufteilung der Mantelbehälter auf die beiden Reaktoren R₁₂ und R₁₃ (bzw. allgemein mehrere Reaktoren) wird allgemein als Splitting bezeichnet.

Im nächsten Schritt werden die Mantelbehälter 71-74 wieder in einen einzigen Reaktor R₁₄ zusammengeführt ("Pooling"), der körperlich natürlich mit einem der anderen Reaktoren, z.B. dem Reaktor R₁₁ identisch sein kann. Dieser Reaktor wird mit einer weiteren Substanz Z beaufschlagt, wobei schliesslich in den Mantelbehältern 71-72 Polymere mit den Molekülen V, W, X und Z und in den Mantelbehältern 73-74 Polymere mit den Molekülen V, W, Y und Z gebildet werden.

Die Aufteilung und Zusammenführung der Mantelbehälter kann natürlich (wie bei Split & Pool Verfahren an sich bekannt) beliebig variiert werden, wobei auch praktisch beliebig viele Mantelbehälter und beliebig viele Reaktoren zum Einsatz kommen können.

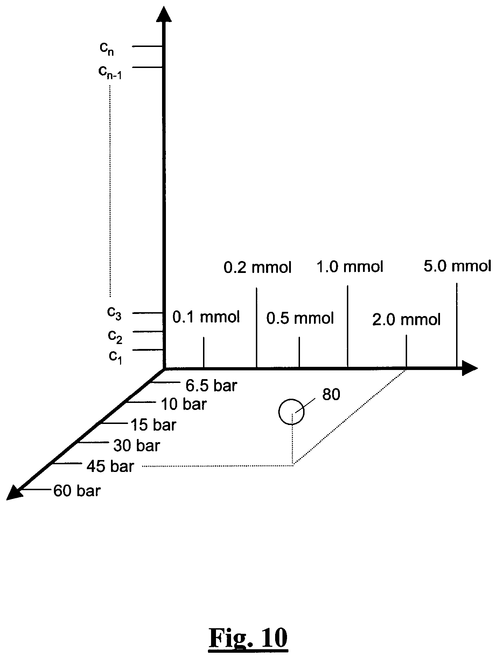

Eine besonders wichtiger Aspekt der Erfindung besteht, wie schon erwähnt, in der Bereitstellung von Sets von Substanzen enthaltenden Behältnissen. Solche Sets können auch als "Substanz-Library" bezeichnet werden. Diese Sets können je nach Anwendungsziel (durchzuführende Reaktionen) unterschiedliche Behältnisse umfassen. Mit unterschiedlich ist dabei gemeint, dass die Behältnisse nach Art der in ihnen enthaltenen Substanzen, nach den Substanzmengen und den Berst-Druckdifferenten, für welche sie ausgelegt sind, variieren können, so wie dies in der Fig. 10 in Form eines Diagramms veranschaulicht ist. Gewissermassen als vierte Dimension bzw. vierter Freiheitsgrad ist dabei auch noch die Anzahl von jeweils identischen Behältnissen anzusehen.

Die Fig. 10 symbolisiert ein Set, dessen Behältnisse mit n verschiedenen Substanzen c₁...cₙ befüllt sind, wobei die jeweiligen Füllmengen moläquivalent von 0.1 mmol .... 5.0 mmol abgestuft sind und die Berst-Druckdifferenzen von 6.5 bar .... 60 bar gehen. Die dargestellten Mengen- und Druckwerte sind natürlich rein beispielsweise zu verstehen. Als konkretes Beispiel ist ein Behältnis 80 eingezeichnet, das eine abgemessene Menge von 2.0 mmol der Substanz c₃ enthält und für eine Berst-Druckdifferenz von 45 bar ausgelegt ist. Nicht zeichnerisch dargestellt ist die Möglichkeit, dass einzelne, mehrere oder alle Behältnisse im Set zwei oder mehrfach vorhanden sein können.

In dem in Fig. 10 symbolisierten Set müssen in der Praxis selbstverständlich nicht alle Möglichen "Koordinatenpunkte" (Kombinationen je einer spezifischen Substanzen, einer spezifischen Substanzmenge und einer spezifischen Berst-Druckdifferenz) "besetzt" sein. Eine bestimmte Substanz kann z.B. in verschiedenen Behältnissen mit unterschiedlichen Füllmengen, aber nur einem einzigen Berst-Druckdifferenzwert vorliegen. Für eine andere Substanz können Behältnisse mit gleichen Substanzmengen, aber unterschiedlichen Berst-Druckdifferenzwerten im Set enthalten sein. Für noch eine andere Substanz können Behältnisse mit z.B. nur zwei unterschiedlichen Berst-Druckdifferenzen und zusätzlich noch mit z.B. drei unterschiedlichen Füllmengen im Set enthalten sein. Im Extremfall kann eine Substanz auch nur in einem einzigen Behältnis in einer einzigen abgemessenen Menge und mit einem einzigen spezifizierten Berst-Druckdifferenzwert des Behältnisses im Set vertreten sein.

Für die praktische Anwendung ist es vorteilhaft, wenn ein Set Behältnisse mit mindestens 2, noch besser mindestens 3 verschiedenen Berst-Druckdifferenzwerten umfasst. Ferner ist es für die Praxis vorteilhaft, wenn ein Set Behältnisse mit jeweils mindestens 3, vorzugsweise 4 und mehr Füllmengenabstufungen enthält, wobei die Füllmengen sowohl gravimetrisch als auch moläquivalent abgestuft sein können. Die Anzahl der vertretenen verschiedenen Substanzen hängt natürlich von den Reaktionen ab, für welche das Set verwendet werden soll. Ferner ist es für die Praxis vorteilhaft, wenn zumindest für die am häufigsten verwendeten Substanzen und Füllmengen jeweils mindestens 2-3, vorzugsweise aber eine wesentlich grössere Anzahl von Behältnissen im Set vertreten sind.

## Patentansprüche

1. Verfahren zur Durchführung einer chemischen Reaktion durch Umsetzung zweier oder mehrerer Substanzen in einem Reaktor (R), bei welchem mindestens eine Substanz in einem gasdicht verschlossenen, im Wesentlichen reaktionsinerten Behältnis (1; 2; 3; 4; 11; 12; 13; 14; 15; 16; 17; 18; 19; 20; 21; 22; 23) vorliegt, in diesem Behältnis in den Reaktor eingebracht und durch Aufbrechen des Behältnisses vor oder im Laufe der Reaktion aus dem Behältnis freigesetzt wird, **dadurch gekennzeichnet, dass** ein Behältnis (1; 2; 3; 4; 11; 12; 13; 14; 15; 16; 17; 18; 19; 20; 21; 22; 23) eingesetzt wird, das so ausgebildet ist, dass es bei Überschreiten einer spezifizierten, in irgendeiner Form bekannten Berst-Druckdifferenz zwischen dem Druck in seinem Inneren und dem Druck ausserhalb des Behältnisses aufbricht, und dass das Aufbrechen des Behältnisses und damit die Freisetzung der im Behältnis befindlichen Substanz durch gezielte Anwendung eines Drucks im Reaktor (R) erfolgt, bei welchem die Differenz zwischen dem Druck im Reaktor (R) und dem Druck im Behältnis die spezifizierte Berst-Druckdifferenz des Behältnisses überschreitet, wobei die gezielte Anwendung eines Drucks im Reaktor (R) durch Beaufschlagung des Reaktors (R) mit einem unter entsprechendem Druck stehenden Gas oder Gasgemisch, durch Anwendung eines Unterdrucks, durch Ausnutzen eines durch die Reaktion selbst im Reaktor (R) entstehenden Drucks oder durch gezieltes Erwärmen von Reaktionsmasse im Reaktor (R) erfolgt.

2. Verfahren nach Anspruch 1, **dadurch gekennzeichnet, dass** ein Behältnis (1; 2; 3; 4; 11; 12; 13; 14; 15; 16; 17; 18; 19; 20; 21; 22; 23) eingesetzt wird, das so ausgebildet ist, dass es bei einem mindestens um die spezifizierte Berst-Druckdifferenz gegenüber seinem Innendruck höheren Aussendruck aufbricht, und dass das Aufbrechen des Behältnisses und damit die Freisetzung der im Behältnis befindlichen Substanz durch gezielte Anwendung eines entsprechenden Überdrucks im Reaktor (R) erfolgt.

3. Verfahren nach einem der vorangehenden Ansprüche, **dadurch gekennzeichnet, dass** zwei oder mehrere gleiche Substanzen in separaten Behältnissen (1; 2; 3; 4; 11; 12; 13; 14; 15; 16; 17; 18; 19; 20; 21; 22; 23) mit unterschiedlichen Berst-Druckdifferenzen vorliegen und durch gezielte Anwendung von auf die unterschiedlichen Berst-Druckdifferenzen angepassten Drücken im Reaktor selektiv aus den jeweiligen Behältnissen freigesetzt werden.

4. Verfahren nach einem der Ansprüche 1-3, **dadurch gekennzeichnet, dass** zwei oder mehrere unterschiedliche Substanzen in separaten Behältnissen (1; 2; 3; 4; 11; 12; 13; 14; 15; 16; 17; 18; 19; 20; 21; 22; 23) mit unterschiedlichen Berst-Druckdifferenzen vorliegen und durch gezielte Anwendung von auf die unterschiedlichen Berst-Druckdifferenzen angepassten Drücken im Reaktor selektiv aus den jeweiligen Behältnissen freigesetzt werden.

5. Verfahren nach einem der vorangehenden Ansprüche, **dadurch gekennzeichnet, dass** der Reaktionsablauf durch druckinduziertes selektives Aufbrechen des Behältnisses bzw. der Behältnisse und dadurch bewirktes selektives Freisetzen der im Behältnis bzw. den Behältnissen befindlichen Substanz bzw. Substanzen gesteuert wird.

6. Verfahren nach einem der vorangehenden Ansprüche, **dadurch gekennzeichnet, dass** vorzugsweise mit Ausnahme von Reaktivgas oder Reaktivlösungsmittel sämtliche für die Reaktion benötigten Substanzen vor dem Start der Reaktion in den Reaktor eingebracht werden und dass die in einem Behältnis bzw. in Behältnissen vorliegende Substanz bzw. Substanzen entsprechend einem Reaktionsplan durch gezieltes druckinduziertes Aufbrechen des Behältnisses bzw. der Behältnisse freigesetzt wird bzw. werden.

7. Verfahren nach einem der vorangehenden Ansprüche, **dadurch gekennzeichnet, dass** Behältnisse (1; 2; 3; 4; 11; 12; 13; 14; 15; 16; 17; 18; 19; 20; 21; 22; 23) mit abgestuften Berst-Druckdifferenzen in den Bereichen 1-10 bar, 10-30 bar, 30-70 bar oder 70-200 bar eingesetzt werden.

8. Verfahren nach einem der vorangehenden Ansprüche, **dadurch gekennzeichnet, dass** zusätzlich mindestens ein Behältnis eingesetzt wird, das eine Substanz enthält, welche die chemische Reaktion stoppt, wobei die spezifizierte Berst-Druckdifferenz dieses Behältnisses höher ist als die spezifizierte Berst-Druckdifferenz aller anderen eingesetzten Behältnisse, aber kleiner oder zumindest nicht grösser ist als ein für die jeweiligen Reaktionsbedingungen zulässiger Maximaldruck.

9. Gasdicht verschlossenes und eine abgemessene Menge einer chemischen Substanz enthaltendes Behältnis, **dadurch gekennzeichnet, dass** das Behältnis (1; 2; 3; 4; 11; 12; 13; 14; 15; 16; 17; 18; 19; 20; 21; 22; 23) für eine spezifizierte, in irgendeiner Form bekannte Berst-Druckdifferenz zwischen dem Druck in seinem Inneren und dem Druck ausserhalb des Behältnisses ausgebildet ist, so dass es bei einer die spezifizierte Berst-Druckdifferenz überschreitenden Druckdifferenz zwischen dem Druck in seinem Inneren und dem Druck ausserhalb des Behältnisses aufbricht und die in ihm enthaltene Substanz freisetzt, und dass dem Behältnis eine Information über die spezifizierte Berst-Druckdifferenz durch eine Markierung am Behältnis selbst oder an oder in einer Behältnis-Verpackung zugeordnet ist.

10. Behältnis nach Anspruch 9, **dadurch gekennzeichnet, dass** die spezifizierte Berst-Druckdifferenz durch Materialwahl, Wandstärke, Formgebung und/oder durch Sollbruchstellen festgelegt ist.

11. Behältnis nach Anspruch 9 oder 10, **dadurch gekennzeichnet, dass** das Behältnis (21; 22; 23) innerhalb eines Mantelbehälters (31; 32; 33) angeordnet ist, wobei der Mantelbehälter zumindest teilweise gas- und/oder flüssigkeitsdurchlässig und ferner so ausgebildet ist, dass er beim druckinduzierten Aufbrechen des in ihm befindlichen Behältnisses selbst nicht zerstört wird.

12. Behältnis nach Anspruch 11, **dadurch gekennzeichnet, dass** der Mantelbehälter (31; 32; 33) mit mindestens einer Fritte (31f; 32f; 33f) oder einem funktionsäquivalenten Element, vorzugsweise einer insbesondere semipermeablen Membran ausgestattet ist.

13. Behältnis nach Anspruch 11 oder 12, **dadurch gekennzeichnet, dass** der Mantelbehälter (33) mit mindestens einer zusätzlichen, eine weitere chemische Substanz enthaltenden Kammer (33a; 33b) ausgestattet ist, welche über eine Fritte (33f) oder ein funktionsäquivalentes Element in gas- und/oder flüssigkeitskommunizierender Verbindung mit einer das Behältnis (23) enthaltenden Kammer (33c) steht und für eine spezifizierte Berst-Druckdifferenz zwischen dem Druck in ihrem Inneren und dem Druck ausserhalb des Mantelbehältnisses ausgebildet ist, so dass sie unter Druckverhältnissen, die die spezifizierte Berst-Druckdifferenz überschreiten, aufbricht und die in ihr enthaltene Substanz freisetzt.

14. Behältnis nach einem der Ansprüche 9-13, **dadurch gekennzeichnet, dass** die Markierung die Form eines Codes oder die Form von Klartext aufweist.

15. Set von mindestens zwei Behältnissen (1; 2; 3; 4; 11; 12; 13; 14; 15; 16; 17; 18; 19; 20; 21; 22; 23) nach Anspruch 9.

16. Set nach Anspruch 15, **dadurch gekennzeichnet, dass** es Behältnisse mit unterschiedlichen Substanzen umfasst, wobei diese Behältnisse für gleiche und/oder unterschiedliche Berst-Druckdifferenzen ausgebildet sind.

17. Set nach Anspruch 15, **dadurch gekennzeichnet, dass** es Behältnisse mit unterschiedlichen Substanzen umfasst, wobei diese Behältnisse für unterschiedliche, vorzugsweise mindestens drei unterschiedliche, Berst-Druckdifferenzen ausgebildet sind.

18. Set nach einem der Ansprüche 15-17, **dadurch gekennzeichnet, dass** es Behältnisse mit gleichen Substanzen umfasst, wobei diese Behältnisse für unterschiedliche, vorzugsweise mindestens drei unterschiedliche, Berst-Druckdifferenzen ausgebildet sind.

19. Set nach einem der Ansprüche 15-18, **dadurch gekennzeichnet, dass** es eine Mehrzahl von Behältnissen umfasst, die sich durch ihre spezifizierte Berst-Druckdifferenz und/oder durch die in ihnen enthaltenen Substanzen und/oder die Mengen der in ihnen enthaltenen Substanzen unterscheiden.

20. Set nach einem der Ansprüche 15-19, **dadurch gekennzeichnet, dass** die Markierung die Form eines Codes oder die Form von Klartext aufweist.

## Claims

1. Method for carrying out a chemical reaction by reacting two or more substances in a reactor (R), in which at least one substance is present in a substantially reaction-inert container (1; 2; 3; 4; 11; 12; 13; 14; 15; 16; 17; 18; 19; 20; 21; 22; 23) that is closed in a gas-tight manner, is introduced into the reactor in this container, and is released from the container by breaking open the container before or during the reaction, **characterised in that** a container (1; 2; 3; 4; 11; 12; 13; 14; 15; 16; 17; 18; 19; 20; 21; 22; 23) is used that is designed such that it breaks open when a specified, known in any form, bursting pressure difference between the internal pressure and the pressure outside the container is exceeded, and **in that** the container is broken open and the substance located in the container is therefore released as a result of deliberate application in the reactor (R) of a pressure, at which the difference between the pressure in the reactor (R) and the pressure in the container exceeds the specified bursting pressure difference of the container, wherein the deliberate application of a pressure in the reactor (R) is achieved by applying a gas or gas mixture under corresponding pressure to the reactor (R), by applying a negative pressure, by utilising a pressure created in the reactor (R) by the reaction itself or by deliberate heating of reaction mass in the reactor (R).

2. Method according to claim 1, **characterised in that** a container (1; 2; 3; 4; 11; 12; 13; 14; 15; 16; 17; 18; 19; 20; 21; 22; 23) is used that is designed such that it breaks open at an external pressure higher than its internal pressure at least by the specified bursting pressure difference, and **in that** the container is broken open and the substance located in the container is therefore released as a result of deliberate application in the reactor (R) of a corresponding overpressure.

3. Method according to one of the preceding claims, **characterised in that** two or more identical substances are present in separate containers (1; 2; 3; 4; 11; 12; 13; 14; 15; 16; 17; 18; 19; 20; 21; 22; 23) with different bursting pressure differences and are released selectively from the respective containers by deliberate application in the reactor of pressures adapted to the different bursting pressure differences.

4. Method according to one of claims 1-3, **characterised in that** two or more different substances are present in separate containers (1; 2; 3; 4; 11; 12; 13; 14; 15; 16; 17; 18; 19; 20; 21; 22; 23) with different bursting pressure differences and are released selectively from the respective containers by deliberate application in the reactor of pressures adapted to the different bursting pressure differences.

5. Method according to one of the preceding claims, **characterised in that** the course of the reaction is controlled by selectively breaking open the container or the containers in a pressure-induced manner and by means of the resultant selective release of the substance or substances located in the container or containers.

6. Method according to one of the preceding claims, **characterised in that** all substances required for the reaction, preferably with the exception of reactive gas or reactive solvent, are introduced into the reactor before the start of the reaction, and **in that** the substance or substances present in a container or in containers is or are released in accordance with a reaction plan by deliberately breaking open the container or the containers in a pressure-induced manner.

7. Method according to one of the preceding claims, **characterised in that** containers (1; 2; 3; 4; 11; 12; 13; 14; 15; 16; 17; 18; 19; 20; 21; 22; 23) with graduated bursting pressure differences in the ranges of 1-10 bar, 10-30 bar, 30-70 bar or 70-200 bar are used.

8. Method according to one of the preceding claims, **characterised in that** at least one container is additionally used, which contains a substance that stops the chemical reaction, the specified bursting pressure difference of this container being higher than the specified bursting pressure difference of all other containers used, but being smaller than or at least not greater than a maximum pressure permissible for the respective reaction conditions.

9. Container, which is closed in a gas-tight manner and contains a measured quantity of a chemical substance, **characterised in that** the container (1; 2; 3; 4; 11; 12; 13; 14; 15; 16; 17; 18; 19; 20; 21; 22; 23) is designed for a specified, known in any form, bursting pressure difference between the internal pressure and the pressure outside the container, such that, when a pressure difference exceeding the specified bursting pressure difference is present between the internal pressure and the pressure outside the container, said container breaks open and releases the substance contained therein, and that information regarding the specified bursting pressure difference is assigned to said container by means of a marking either on the container itself or on or in a container packaging.

10. Container according to claim 9, **characterised in that** the specified bursting pressure difference is determined by material selection, wall thickness, shaping and/or by predetermined breaking points.

11. Container according to claim 9 or 10, **characterised in that** the container (21; 22; 23) is arranged within a casing container (31; 32; 33), wherein the casing container is at least partially gas-permeable and/or liquid-permeable and is also designed such that it is not destroyed itself when the container located therein is broken open in a pressure-induced manner.

12. Container according to claim 11, **characterised in that** the casing container (31; 32; 33) is equipped with at least one frit (31f; 32f; 33f) or a functionally equivalent element, preferably a membrane that is semi-permeable in particular.

13. Container according to claim 11 or 12, **characterised in that** the casing container (33) is equipped with at least one additional chamber (33a; 33b) containing a further chemical substance, said chamber being in gas communication and/or liquid communication via a frit (33f) or a functionally equivalent element with a chamber (33c) containing the container (23) and being designed for a specified bursting pressure difference between the internal pressure and the pressure outside the casing container, such that it breaks open under pressure conditions that exceed the specified bursting pressure difference and releases the substance contained therein.

14. Container according to one of claims 9-13, **characterised in that** the marking has the form of a code or the form of plain text.

15. Set of at least two containers (1; 2; 3; 4; 11; 12; 13; 14; 15; 16; 17; 18; 19; 20; 21; 22; 23) according to claim 9.

16. Set according to claim 15, **characterised in that** it comprises containers with different substances, these containers being designed for identical and/or different bursting pressure differences.

17. Set according to claim 15, **characterised in that** it comprises containers with different substances, these containers being designed for different, preferably at least three different, bursting pressure differences.

18. Set according to one of claims 15-17, **characterised in that** it comprises containers with identical substances, these containers being designed for different, preferably at least three different, bursting pressure differences.

19. Set according to one of claims 15-18, **characterised in that** it comprises a plurality of containers, which differ by their specified bursting pressure difference and/or by the substances contained therein and/or by the quantities of the substances contained therein.

20. Set according to one of claims 15-19, **characterised in that** the marking has the form of a code or the form of plain text.

## Revendications

1. Procédé de mise en œuvre d'une réaction chimique par transformation de deux ou plusieurs substances dans un réacteur (R), selon lequel au moins une substance est présente dans un récipient (1 ; 2 ; 3 ; 4 ; 11 ; 12 ; 13 ; 14 ; 15 ; 16 ; 17 ; 18 ; 19 ; 20 ; 21 ; 22 ; 23) fermé de manière étanche aux gaz et sensiblement inerte sur le plan de la réaction, est introduite dans le réacteur en se trouvant dans ce récipient et est libérée du récipient par rupture du récipient avant ou pendant la réaction, **caractérisé en ce que** l'on utilise un récipient (1 ; 2 ; 3 ; 4 ; 11 ; 12 ; 13 ; 14 ; 15 ; 16 ; 17 ; 18 ; 19 ; 20 ; 21 ; 22 ; 23) qui est réalisé de manière à ce qu'il se brise en cas de dépassement d'une différence de pression d'éclatement spécifiée, connue sous une forme quelconque, entre la pression en son intérieur et la pression à l'extérieur du récipient, et **en ce que** la rupture du récipient et donc la libération de la substance se trouvant dans le récipient s'effectuent par application ciblée d'une pression dans le réacteur (R), en présence de laquelle la différence entre la pression dans le réacteur (R) et la pression dans le récipient dépasse la différence de pression d'éclatement spécifiée du récipient, l'application ciblée d'une pression dans le réacteur (R) s'effectuant par le fait que le réacteur (R) est soumis à l'action d'un gaz ou d'un mélange de gaz présentant une pression correspondante, par application d'une dépression, par utilisation d'une pression créée par la réaction elle-même dans le réacteur (R) ou par chauffage ciblé d'une masse réactionnelle dans le réacteur (R).

2. Procédé selon la revendication 1, **caractérisé en ce que** l'on utilise un récipient (1 ; 2 ; 3 ; 4 ; 11 ; 12 ; 13 ; 14 ; 15 ; 16 ; 17 ; 18 ; 19 ; 20 ; 21 ; 22 ; 23) qui est réalisé de manière à ce qu'il se brise lorsqu'une pression extérieure dépasse sa pression intérieure au moins de la différence de pression d'éclatement spécifiée, et **en ce que** la rupture du récipient et par conséquent la libération de la substance se trouvant dans le récipient s'effectuent par application ciblée d'une surpression correspondante dans le réacteur (R).

3. Procédé selon une des revendications précédentes, **caractérisé en ce que** deux ou plusieurs substances identiques sont présentes dans des récipients (1 ; 2 ; 3 ; 4 ; 11 ; 12 ; 13 ; 14 ; 15 ; 16 ; 17 ; 18 ; 19 ; 20 ; 21 ; 22 ; 23) séparés, avec des différences de pression d'éclatement différentes, et sont libérées de manière sélective des récipients respectifs, par application ciblée, dans le réacteur, de pressions qui sont adaptées aux différences de pression d'éclatement différentes.

4. Procédé selon une des revendications 1 à 3, **caractérisé en ce que** deux ou plusieurs substances différentes sont présentes dans des récipients (1 ; 2 ; 3 ; 4 ; 11 ; 12 ; 13 ; 14 ; 15 ; 16 ; 17 ; 18 ; 19 ; 20 ; 21 ; 22 ; 23) séparés, avec des différences de pression d'éclatement différentes, et sont libérées de manière sélective des récipients respectifs, par application ciblée, dans le réacteur, de pressions qui sont adaptées aux différences de pression d'éclatement différentes.

5. Procédé selon une des revendications précédentes, **caractérisé en ce que** le déroulement de la réaction est commandé par rupture sélective du récipient ou des récipients, induite par la pression, et par la libération sélective, ainsi provoquée, de la substance ou des substances se trouvant dans le ou les récipients.

6. Procédé selon une des revendications précédentes, **caractérisé en ce que**, de préférence à l'exception de gaz réactifs ou de solvants réactifs, toutes les substances nécessaires à la réaction sont introduites dans le réacteur avant le déclenchement de la réaction, et **en ce que** la substance ou les substances présentes dans un récipient ou dans des récipients sont libérées conformément à un plan de réactions, par rupture ciblée, induite par la pression, du ou des récipients.

7. Procédé selon une des revendications précédentes, **caractérisé en ce que** l'on utilise des récipients (1 ; 2 ; 3 ; 4 ; 11 ; 12 ; 13 ; 14 ; 15 ; 16 ; 17 ; 18 ; 19 ; 20 ; 21 ; 22 ; 23) avec des différences de pression d'éclatement graduées, comprises dans les plages allant de 1 à 10 bars, de 10 à 30 bars, de 10 à 30 bars, de 30 à 70 bars ou de 70 à 200 bars.

8. Procédé selon une des revendications précédentes, **caractérisé en ce que**, en outre, on utilise au moins un récipient contenant une substance qui arrête la réaction chimique, la différence de pression d'éclatement spécifiée de ce récipient étant supérieure à la différence de pression d'éclatement spécifiée de tous les autres récipients utilisés, mais inférieure ou du moins pas supérieure à une pression maximale admissible pour les conditions de réaction respectives.

9. Récipient fermé de manière étanche aux gaz et contenant une quantité mesurée d'une substance chimique, **caractérisé en ce que** le récipient (1 ; 2 ; 3 ; 4 ; 11 ; 12 ; 13 ; 14 ; 15 ; 16 ; 17 ; 18 ; 19 ; 20 ; 21 ; 22 ; 23) est conçu pour une différence de pression d'éclatement spécifiée, connue sous une forme quelconque, entre la pression en son intérieur et la pression à l'extérieur du récipient, de manière à ce qu'il se brise lorsque la différence de pression entre la pression en son intérieur et la pression à l'extérieur du récipient dépasse la différence de pression d'éclatement spécifiée, et libère la substance qu'il contient, et **en ce qu'**une information relative à la différence de pression d'éclatement spécifiée est associée au récipient, sous la forme d'un repère sur le récipient lui-même ou bien sur ou dans un emballage du récipient.

10. Récipient selon la revendication 9, **caractérisé en ce que** la différence de pression d'éclatement spécifiée est définie par le choix des matériaux, l'épaisseur de paroi, la conformation et/ou par des points destinés à la rupture.

11. Récipient selon la revendication 9 ou 10, **caractérisé en ce que** le récipient (21, 22, 23) est disposé à l'intérieur d'un contenant enveloppe (31 ; 32 ; 33), le contenant enveloppe étant réalisé au moins en partie de manière à laisser passer un gaz et/ou un liquide, et étant réalisé en outre de manière à ce qu'il ne soit pas lui-même détruit lors de la rupture, induite par la pression, du récipient qu'il contient.

12. Récipient selon la revendication 11, **caractérisé en ce que** le contenant enveloppe (31 ; 32 ; 33) est doté d'au moins une fritte (31f ; 32f ; 33f) ou d'un élément à fonction équivalente, de préférence d'une membrane, notamment semi-perméable.

13. Récipient selon la revendication 11 ou 12, **caractérisé en ce que** le contenant enveloppe (33) est doté d'au moins une chambre (33a ; 33b) supplémentaire qui contient une substance chimique supplémentaire et est en liaison de communication de gaz et/ou de liquide avec une chambre (33c) contenant le récipient (23), par l'intermédiaire d'une fritte (33f) ou d'un élément à fonction équivalente, et est conçue pour une différence de pression d'éclatement spécifiée entre la pression en son intérieur et la pression à l'extérieur du contenant enveloppe, de sorte que dans des conditions de pression qui dépassent la différence de pression d'éclatement spécifiée, elle se brise et libère la substance qu'elle contient.

14. Récipient selon une des revendications 9 à 13, **caractérisé en ce que** le repère présente la forme d'un code ou la forme d'un texte en clair.

15. Ensemble d'au moins deux récipients (1 ; 2 ; 3 ; 4 ; 11 ; 12 ; 13 ; 14 ; 15 ; 16 ; 17 ; 18 ; 19 ; 20 ; 21 ; 22 ; 23) selon la revendication 9.

16. Ensemble selon la revendication 15, **caractérisé en ce qu'**il comporte des récipients avec des substances différentes, lesdits récipients étant conçus pour des différences de pression d'éclatement identiques et/ou différentes.

17. Ensemble selon la revendication 15, **caractérisé en ce qu'**il comporte des récipients avec des substances différentes, lesdits récipients étant conçus pour des différences de pression d'éclatement différentes, de préférence au moins trois différences de pression d'éclatement différentes.

18. Ensemble selon une des revendications 15 à 17, **caractérisé en ce qu'**il comporte des récipients avec des substances identiques, lesdits récipients étant conçus pour des différences de pression d'éclatement différentes, de préférence au moins trois différences de pression d'éclatement différentes.

19. Ensemble selon une des revendications 15 à 18, **caractérisé en ce qu'**il comporte une pluralité de récipients qui se distinguent par leur différence de pression d'éclatement spécifiée et/ou par les substances qu'ils contiennent et/ou les quantités des substances qu'ils contiennent.

20. Ensemble selon une des revendications 15 à 19, **caractérisé en ce que** le repère présente la forme d'un code ou la forme d'un texte en clair.
